# EUROPEAN PATENT APPLICATION

(11) **EP 4 443 979 A1**
(43) Date of publication of application: **09.10.2024**
(21) Application number: 22918366.0
(22) Date of filing: 13.12.2022
(51) Int. Cl.: H04W 48/20

(54) **CELL DETERMINATION METHOD AND APPARATUS**

(30) Priority: 05.01.2022 CN 202210008415
(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: Goddar, Heinz J.
(86) International application number: PCT/CN2022/138643
(87) International publication number: WO 2023/130916

(57) **Abstract**

Embodiments of this application provide a cell determining method and an apparatus. A terminal device determines a first slice group including a first network slice, where the first network slice is a network slice to be accessed by the terminal device; determines a first cell from one or more cells, where a relative priority of the first slice group in the first cell is highest in the one or more cells, or a dedicated priority corresponding to the first slice group in the first cell is highest in the one or more cells; and accesses the first network slice in the first cell, where the one or more cells are cells in which the terminal device can receive broadcast information and a tracking area code TAC carried in the broadcast information identifies a first tracking area, and the first tracking area is a tracking area TA that can support the first network slice, or the one or more cells are cells in which the terminal device can receive broadcast information and the broadcast information carries the first slice group. According to the method, the terminal device can preferably select a specific cell to access the first network slice.

## Description

This application claims priority to Chinese Patent Application No. 202210008415.8, filed with the China National Intellectual Property Administration on January 5, 2022 and entitled "CELL DETERMINING METHOD AND APPARATUS", which is incorporated herein by reference in its entirety.

### TECHNICAL FIELD

This application relates to the field of communication technologies, and in particular, to a cell determining method and an apparatus.

### BACKGROUND

A network slice is a logical network that is obtained by dividing a communication network deployed by an operator and that has a specific network feature. The operator may obtain a plurality of network slices by dividing the deployed communication network. The plurality of network slices are logically isolated from each other and have different network features, to meet differentiated network requirements of service data flows of different applications.

A cell provides access to the network slice for a terminal device. Different cells may support a same network slice, or may support different network slices. In addition, the operator also deploys some cells to preferably support some network slices. In this case, how the terminal device selects or reselects an appropriate cell to access a required network slice is an urgent problem to be resolved.

### SUMMARY

Embodiments of this application provide a cell determining method and an apparatus, so that a terminal device can select or reselect an appropriate cell to access a required network slice.

According to a first aspect, this application provides a cell determining method. The method includes: A terminal device determines a first slice group including a first network slice, where the first network slice is a network slice to be accessed by the terminal device. The terminal device determines a first cell from one or more cells, and then accesses the first network slice in the first cell, where a relative priority of the first slice group in the first cell is highest in the one or more cells, or a dedicated priority corresponding to the first slice group in the first cell is highest in the one or more cells; and the one or more cells are cells in which the terminal device can receive broadcast information and a tracking area code (tracking area code, TAC) carried in the broadcast information identifies a first tracking area, and the first tracking area is a tracking area (tracking area, TA) that can support the first network slice, or the one or more cells are cells in which the terminal device can receive broadcast information and the broadcast information carries the first slice group.

It can be learned that the terminal device can determine, based on a relative priority of a first slice group in each cell or a dedicated priority corresponding to a first slice group, a cell preferably selected by the terminal device for accessing the first network slice. The cell preferably selected by the terminal device for accessing the first network slice can better meet a performance requirement of the first network slice, and improve performance of the first network slice, so that the first network slice can provide a better network service for the terminal device.

In an optional implementation, the relative priority of the first slice group is carried in the broadcast information, or the dedicated priority corresponding to the first slice group is configured by a network device for the terminal device. In this implementation, the relative priority of the first slice group or the dedicated priority corresponding to the first slice group may be provided by a network, so that the network can control the terminal device to preferably select a specific cell to access the first network slice.

In an optional implementation, the method further includes: The terminal device receives dedicated priority information from the network device, where the dedicated priority information includes a dedicated priority corresponding to a slice group to which a network slice configured for the terminal device belongs, or the dedicated priority information includes, in a TA, a dedicated priority corresponding to a slice group to which a network slice configured for the terminal device belongs. The terminal device determines, based on the dedicated priority information, a dedicated priority corresponding to the first slice group in each cell. In this implementation, the terminal device can obtain, based on the dedicated priority information configured by the network device for the terminal device, the dedicated priority corresponding to the first slice group in each cell, so that the terminal device can determine the first cell with the highest dedicated priority.

In an optional implementation, when there are at least two cells with highest relative priorities of the first slice group in the plurality of cells, the first cell is a cell with optimal radio signal quality in the at least two cells. It can be learned that when there are the at least two cells with the highest relative priorities of the first slice group in the one or more cells, the terminal device can select the cell with the optimal radio signal quality from the at least two cells to access the first network slice.

In an optional implementation, the one or more cells work at a first frequency band, and the first frequency band is preset or is configured by the network device. It can be learned that the terminal device can select the first cell from the one or more cells working at a same frequency band. The relative priority of the first slice group in the first cell is highest in the one or more cells working at the first frequency band, or the dedicated priority corresponding to the first slice group in the first cell is highest in the one or more cells working at the first frequency band.

In an optional implementation, the method further includes: The terminal device determines a to-be-accessed network slice as the first network slice; or when there are a plurality of to-be-accessed network slices, the terminal device selects, as the first network slice from the plurality of to-be-accessed network slices, a network slice in which a protocol data unit (protocol data unit, PDU) session is established; or when there are a plurality of network slices in which a PDU session is established in to-be-accessed network slices, the terminal device selects, as the first network slice from the plurality of network slices, a network slice in which the PDU session is in an active state. In this implementation, the terminal device can determine the first network slice. Particularly, when there are the plurality of to-be-accessed network slices, the terminal device can preferably select one network slice from the plurality of to-be-accessed network slices for cell selection or cell reselection.

According to a second aspect, this application provides a cell determining method. The method is applied to an access network device, and the method includes: The access network device broadcasts relative priorities of slice groups in one or more cells, where a broadcast relative priority of a slice group in each cell is a relative priority of a slice group to which a network slice supported by the cell belongs, and the relative priorities of the slice groups in the one or more cells broadcast by the access network device are used by a terminal device to perform cell selection or cell reselection.

It can be learned that the access network device broadcasts the relative priority of the slice group to which the network slice supported by each cell belongs, so that the terminal device learns a relative priority of a slice group to which a to-be-accessed network slice belongs in the cell that supports the to-be-accessed network slice, and the terminal device determines a cell for accessing the network slice. Therefore, a network can control the terminal device to preferably select a specific cell to access the network slice.

In an optional implementation, the relative priorities of the slice groups in the one or more cells are carried in broadcast information. Optionally, the broadcast information is a system information block (system information block, SIB).

In an optional implementation, the relative priorities of the slice groups in the one or more cells are configured by the access network device. Optionally, in each of the one or more cells, the access network device determines a high relative priority for the slice group to which the network slice preferably supported by the cell belongs, and determines a low relative priority for a slice group to which a network slice other than the preferably supported network slice belongs.

In an optional implementation, before the access network device broadcasts relative priorities of slice groups in one or more cells, the method further includes: The access network device determines frequency band priority information of one or more network slices, where frequency band priority information of each network slice includes frequency band priorities of the network slice in one or more frequency bands. The access network device determines, for each of the one or more cells based on a frequency band priority of a network slice supported by the cell in a working frequency band of the cell, a relative priority of a slice group to which the network slice belongs. Alternatively, frequency band priority information of each network slice is a frequency band list in which performance or experience of the network slice at each of one or more working frequency bands is sorted in descending order. For each of the one or more cells, the access network device determines, based on a location of the working frequency band of the cell in the frequency band list of the network slice, a relative priority of a slice group to which the network slice belongs.

It can be learned that in this implementation, the access network device can determine, based on the frequency band priority information of each network slice and a working frequency band of each cell, the relative priority of the slice group to which the network slice supported by each cell belongs. A higher frequency band priority of a working frequency band of a cell that supports a network slice in the one or more frequency bands, or a location nearer to the front in the frequency band list indicates that the cell can better meet a performance requirement of the network slice. In this case, a higher relative priority of the slice group to which the network slice belongs in the cell can be configured. Therefore, the terminal device can select, when determining a cell, a cell that can better meet the performance requirement or an experience requirement of the to-be-accessed network slice, and obtain a better network service provided by the to-be-accessed network slice.

In an optional implementation, a relative priority of a slice group to which a network slice preferably supported by each of the one or more cells belongs is higher than a relative priority of a slice group to which a network slice other than the preferably supported network slice in the cell belongs. Optionally, a frequency band priority of a network slice preferably supported by each cell in a working frequency band of the cell is highest in the one or more frequency bands. In this implementation, the access network device can configure the relative priority of the slice group to which the preferably supported network slice in each cell belongs to be higher than a relative priority of a slice group to which a non-preferably supported network slice belongs. Therefore, when accessing a specific network slice, a network controls most terminal devices to select, based on a difference between relative priorities, of slice groups to which the network slice belongs, broadcast by the one or more cells, the cell that preferably supports the network slice, and avoids selecting a cell that does not preferably support the network slice as much as possible.

According to a third aspect, this application provides a cell determining method. The method includes: A network device determines dedicated priority information for a terminal device, where the dedicated priority information includes a dedicated priority, in a tracking area TA, of a slice group to which a network slice configured for the terminal device belongs. The network device sends the dedicated priority information to the terminal device, where the dedicated priority information is used by the terminal device to perform cell selection or cell reselection.

It can be learned that, in this implementation, the network device can configure the dedicated priority information for the terminal device, so that the terminal device learns, based on the dedicated priority information, in a cell that supports the to-be-accessed network slice, the dedicated priority corresponding to the slice group to which the to-be-accessed network slice belongs, and the terminal device determines a cell for accessing the network slice. The network can control a specific terminal device to preferably select a specific cell to access the network slice, and another terminal that is not configured with the dedicated priority information selects another cell to access the network slice based on the relative priority, of the slice group to which the network slice belongs, broadcast by the cell. The network controls the specific terminal to access the network slice by using the cell different from cells used by most terminals, and this provides a differentiated network service for the specific terminal.

In an optional implementation, the dedicated priority information includes dedicated priorities of slice groups to which network slices configured for the terminal device belong in one or more TAs at or near a location of the terminal device. For a network slice configured for the terminal device, in the one or more TAs, dedicated priorities of slice groups to which the network slice belongs may be different. The network device can configure, in the dedicated priority information configured for the terminal device, a highest dedicated priority corresponding to the slice group to which the network slice belongs in a specific TA, so that the network controls the terminal device to preferably select a cell in the specific TA to access the network slice.

In an optional implementation, slice groups to which the network slices configured for the terminal device belong in the one or more TAs correspond to deployment frequency bands, and the dedicated priority information includes a dedicated priority corresponding to a slice group to which the network slice belongs in each TA in a corresponding deployment frequency band. For a network slice configured for the terminal device, in the one or more TAs, dedicated priorities of slice groups to which the network slice belongs may be different in the corresponding deployment frequency band. The network device can configure, in the dedicated priority information configured for the terminal device, a dedicated priority corresponding to the slice group corresponding to a specific deployment frequency band to be highest, so that the network controls the terminal device to preferably select a cell working in the specific deployment frequency band to access the network slice.

In an optional implementation, the dedicated priority information is carried in a registration response message, or the dedicated priority information is carried in a configuration update message.

In an optional implementation, the network device configures different dedicated priority information for different terminal devices, or the network device configures dedicated priority information for some terminal devices, but does not configure dedicated priority information for other terminal devices. It can be learned that in this implementation, the network can control a specific terminal device to perform cell selection or cell reselection.

According to a fourth aspect, this application provides a cell determining method. The method is applied in an access network device, and the method includes: The access network device broadcasts slice groups in one or more cells, where a broadcast slice group in each cell is a slice group to which a network slice preferably supported by the cell belongs, and the slice groups in the one or more cells broadcast by the access network device are used by a terminal device to perform cell selection or cell reselection.

It can be learned that in this implementation, the access network device broadcasts only the slice group to which the network slice preferably supported by each cell belongs, instead of broadcasting slice groups to which all the network slices supported by each cell belong. This helps control a cell selected by the terminal device to be the cell that preferably supports a to-be-accessed network slice, and helps the terminal device select a cell that better meets a performance requirement or an experience requirement of the to-be-accessed network slice.

In an optional implementation, before the access network device broadcasts slice groups in one or more cells, the method further includes: The access network device selects, for each of the one or more cells, a slice group to which a preferably supported network slice belongs from one or more slice groups in the cell, as a broadcast slice group.

In an optional implementation, for each of the one or more cells, the access network device skips broadcasting a slice group to which a network slice other than the preferably supported network slice in a network slice supported by the cell belongs.

In an optional implementation, the slice group broadcast by the access network device excludes a slice group to which a network slice other than the preferably supported network slice in the network slices supported by each of the one or more cells belongs.

In an optional implementation, the network slice preferably supported by each of the one or more cells is determined based on frequency band priority information of the network slice, frequency band priority information of each network slice includes frequency band priorities of the network slice in one or more frequency bands, and a frequency band priority of the network slice preferably supported by each cell in a working frequency band of the cell is highest in the one or more frequency bands. Alternatively, frequency band priority information of each network slice is a frequency band list in which performance or experience of the network slice at each of one or more working frequency bands is sorted in descending order. For each of the one or more cells, the access network device determines, based on whether a working frequency band of the cell is at a highest location in the frequency band list of the network slice, whether the cell preferably supports the network slice.

It can be learned that in this implementation, the network device can determine, based on the frequency band priority information of the network slice and a working frequency band of each cell, whether the cell preferably supports the network slice. When a cell preferably supports a network slice, it indicates that the cell can better meet a performance requirement of the network slice. Therefore, the terminal device can select, when determining a cell, a cell that can better meet the performance requirement of the to-be-accessed network slice, and obtain a better network service provided by the to-be-accessed network slice.

In an optional implementation, the method further includes: The access network device determines dedicated priority information for the terminal device, where the dedicated priority information includes a dedicated priority corresponding to a slice group to which a network slice configured for the terminal device belongs, or the dedicated priority information includes, in a tracking area TA, a dedicated priority corresponding to a slice group to which a network slice configured for the terminal device belongs. The access network device sends the dedicated priority information to the terminal device, where the dedicated priority information is used by the terminal device to perform cell selection or cell reselection.

It can be learned that, in this implementation, when determining that at least two cells that the slice group to which the to-be-accessed network slice belongs have broadcast, the terminal device can select a cell with a highest dedicated priority from the at least two cells with reference to dedicated priorities corresponding to the slice group to which the to-be-accessed network slice belongs in each of the at least two cells.

In an optional implementation, the access network device configures different dedicated priority information for different terminal devices. It can be learned that in this implementation, the network can control a specific terminal device to perform cell selection or cell reselection.

According to a fifth aspect, this application provides a terminal device. For beneficial effect, refer to the descriptions of the first aspect. Details are not described herein again. The terminal device has a function of implementing behavior in the method instance in the first aspect. The function may be implemented by hardware, or may be implemented by hardware executing corresponding software. The hardware or the software includes one or more modules corresponding to the foregoing function.

In a possible design, the terminal device includes: a determining unit, configured to determine a first slice group including a first network slice, where the first network slice is a network slice to be accessed by the terminal device, the determining unit is further configured to determine a first cell from one or more cells, and a relative priority of the first slice group in the first cell is highest in the one or more cells, or a dedicated priority corresponding to the first slice group in the first cell is highest in the one or more cells; and
the one or more cells are cells in which the terminal device can receive broadcast information and a tracking area code TAC carried in the broadcast information identifies a first tracking area, and the first tracking area is a tracking area TA that can support the first network slice, or the one or more cells are cells in which the terminal device can receive broadcast information and the broadcast information carries the first slice group; and
an access unit, configured to access the first network slice in the first cell.

These modules may perform corresponding functions in the method example in the first aspect. For details, refer to the detailed descriptions in the method example. Details are not described herein again.

According to a sixth aspect, this application provides an access network device. For beneficial effect, refer to the descriptions of the second aspect. Details are not described herein again. The access network device has a function of implementing behavior in the method instance in the second aspect. The function may be implemented by hardware, or may be implemented by hardware executing corresponding software. The hardware or the software includes one or more modules corresponding to the foregoing function.

In a possible design, the access network device includes: a communication unit, configured to broadcast relative priorities of slice groups in one or more cells, where a broadcast relative priority of a slice group in each cell is a relative priority of a slice group to which a network slice supported by the cell belongs, and the relative priorities of the slice groups in the one or more cells broadcast by the communication unit are used by a terminal device to perform cell selection or cell reselection.

These modules may perform corresponding functions in the method example in the second aspect. For details, refer to the detailed descriptions in the method example. Details are not described herein again.

According to a seventh aspect, this application provides a network device. For beneficial effect, refer to the descriptions of the third aspect. Details are not described herein again. The network device has a function of implementing behavior in the method instance in the third aspect. The function may be implemented by hardware, or may be implemented by hardware executing corresponding software. The hardware or the software includes one or more modules corresponding to the foregoing function.

In a possible design, the network device includes: a determining unit, configured to determine dedicated priority information for a terminal device, where the dedicated priority information includes a dedicated priority, in a tracking area TA, of a slice group to which a network slice configured for the terminal device belongs; and a communication unit, configured to send the dedicated priority information to the terminal device, where the dedicated priority information is used by the terminal device to perform cell selection or cell reselection.

These modules may perform corresponding functions in the method example in the third aspect. For details, refer to the detailed descriptions in the method example. Details are not described herein again.

According to an eighth aspect, this application provides an access network device. For beneficial effect, refer to the descriptions of the fourth aspect. Details are not described herein again. The access network device has a function of implementing behavior in the method instance in the fourth aspect. The function may be implemented by hardware, or may be implemented by hardware executing corresponding software. The hardware or the software includes one or more modules corresponding to the foregoing function.

In a possible design, the access network device includes: a communication unit, configured to broadcast slice groups in one or more cells, where a broadcast slice group in each cell is a slice group to which a network slice preferably supported by the cell belongs, and the slice groups in the one or more cells broadcast by the communication unit are used by a terminal device to perform cell selection or cell reselection.

These modules may perform corresponding functions in the method example in the fourth aspect. For details, refer to the detailed descriptions in the method example. Details are not described herein again.

According to a ninth aspect, this application provides a communication apparatus, including a memory and a processor. The memory is configured to store instructions or a computer program. The processor is configured to execute the computer program or the instructions stored in the memory, so that the communication apparatus performs the method according to the first aspect, or performs the method according to the second aspect, or performs the method according to the third aspect, or performs the method according to the fourth aspect.

According to a tenth aspect, this application provides a computer-readable storage medium, configured to store a computer program. When the computer program is run on a computer, the computer is enabled to perform the method according to the first aspect, or perform the method according to the second aspect, or perform the method according to the third aspect, or perform the method according to the fourth aspect.

According to an eleventh aspect, an embodiment of this application provides a chip or a chip system. The chip or the chip system includes at least one processor and an interface, the interface and the at least one processor are interconnected through a line, and the at least one processor is configured to run a computer program or instructions, to perform the method according to the first aspect, or perform the method according to the second aspect, or perform the method according to the third aspect, or perform the method according to the fourth aspect.

The interface in the chip may be an input/output interface, a pin, a circuit, or the like.

The chip system in the foregoing aspect may be a system on chip (system on chip, SOC), a baseband chip, or the like. The baseband chip may include a processor, a channel encoder, a digital signal processor, a modem, an interface module, and the like.

In a possible implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

According to a twelfth aspect, this application provides a computer program or a computer program product, including computer instructions. When the computer instructions are run on a computer, the computer is enabled to perform the method according to the first aspect, or perform the method according to the second aspect, or perform the method according to the third aspect, or perform the method according to the fourth aspect.

### BRIEF DESCRIPTION OF DRAWINGS

FIG. 1a is a schematic diagram of a structure of a communication system according to an embodiment of this application;
FIG. 1b is a schematic diagram of a structure of a system architecture according to an embodiment of this application;
FIG. 2 is a schematic diagram of network slice deployment;
FIG. 3 is a schematic flowchart of a cell determining method 100 according to an embodiment of this application;
FIG. 4 is a schematic flowchart of a cell determining method 200 according to an embodiment of this application;
FIG. 5A and FIG. 5B are a schematic diagram of an example of a cell determining method according to an embodiment of this application;
FIG. 6 is a schematic diagram of network slice deployment according to an embodiment of this application;
FIG. 7 is a schematic flowchart of a cell determining method 300 according to an embodiment of this application;
FIG. 8A and FIG. 8B are a schematic diagram of another example of a cell determining method according to an embodiment of this application;
FIG. 9 is a schematic diagram of another network slice deployment according to an embodiment of this application;
FIG. 10 is a schematic flowchart of a cell determining method 400 according to an embodiment of this application;
FIG. 11 is a schematic diagram of still another example of a cell determining method according to an embodiment of this application;
FIG. 12 is a schematic diagram of still another network slice deployment according to an embodiment of this application;
FIG. 13 is a schematic diagram of a structure of a terminal device according to an embodiment of this application;
FIG. 14 is a schematic diagram of a structure of a network device according to an embodiment of this application;
FIG. 15 is a schematic diagram of a structure of an access network device according to an embodiment of this application;
FIG. 16 is a schematic diagram of a structure of a communication apparatus according to an embodiment of this application; and
FIG. 17 is a schematic diagram of a structure of a chip according to an embodiment of this application.

### DESCRIPTION OF EMBODIMENTS

The following describes embodiments of this application with reference to accompanying drawings in embodiments of this application.

To better understand a cell determining method disclosed in embodiments of this application, a communication system to which embodiments of this application are applicable is first described.

Technical solutions in embodiments of this application are applied to various communication systems, for example, a global system for mobile communications, a long term evolution (Long Term Evolution, LTE) system, a 4th-generation (4th-Generation, 4G) mobile communication technology system, and a next-generation radio access technology (New Radio, NR) system. With continuous development of communication technologies, the technical solutions in embodiments of this application are applied to a subsequent evolved communication system, such as a 6th-generation (6th-Generation, 6G) mobile communication technology system, and a 7th-generation (7th-Generation, 7G) mobile communication technology system.

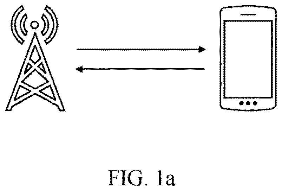

FIG. 1a is a schematic diagram of a structure of a communication system according to an embodiment of this application. The communication system may include but is not limited to one network device and one terminal device. The communication system may further include a channel for data transmission between the network device and the terminal device, for example, a transmission medium such as an optical fiber, a cable, or an atmosphere. The network device in the communication system may be an access network (access network, AN) device or a core network device. Quantities and forms of devices shown in FIG. 1a are used as examples and do not constitute a limitation on embodiments of this application. In actual application, two or more network devices and two or more terminal devices may be included. The communication system shown in FIG. 1a is described by using one network device and one terminal device as an example. In FIG. 1a, an example in which the network device is a base station and the terminal device is a mobile phone is used.

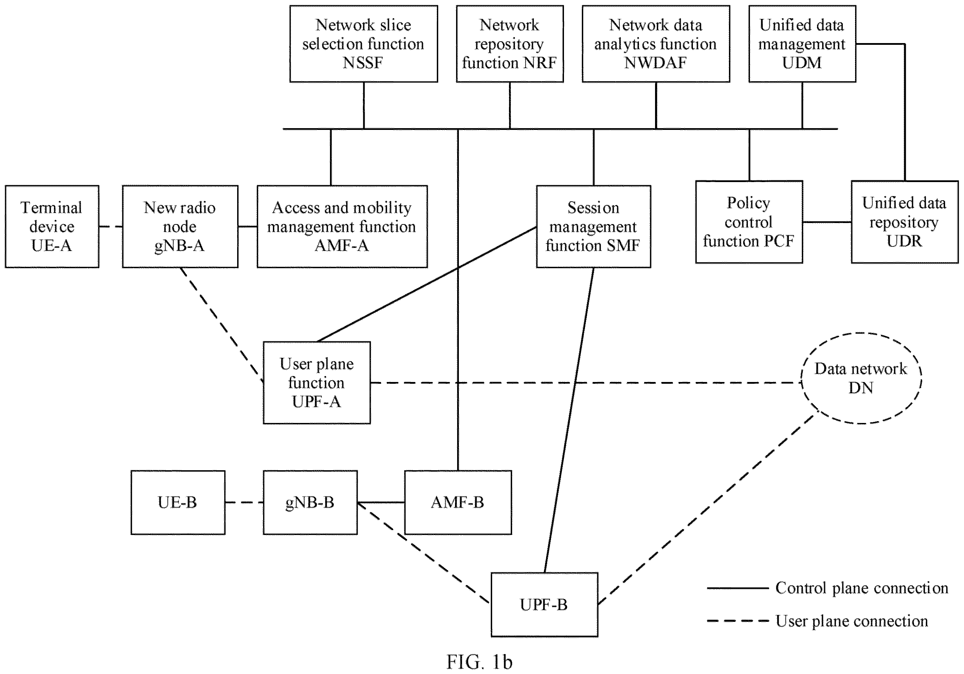

FIG. 1b is a schematic diagram of a structure of a system architecture according to an embodiment of this application. The system architecture includes a terminal device, an AN device, and a core network device. The core network device may include an access and mobility management network element, a session management network element, a user plane network element, a policy control network element, a network slice selection network element, a network repository function network element, a network data analytics network element, a unified data management network element, and a unified data repository network element. The access and mobility management network element, the session management network element, the policy control network element, the network slice selection network element, the network repository function network element, the network data analytics network element, the unified data management network element, and the unified data repository network element are all connected to a service bus.

In addition, the system architecture may further include a data network (data network, DN) connected to an operator network. The terminal device may send service data to the DN, or may obtain service data from the DN. Specifically, a procedure in which the terminal device sends the service data to the DN may include: The terminal device sends the service data to the AN device, the AN device sends the service data to the user plane network element, and then the user plane network element sends the service data to the DN. A procedure in which the terminal device obtains the service data from the DN may include: The DN sends the service data to the user plane network element, the user plane network element sends the service data to the AN device, and then the AN device sends the service data to the terminal device, so that the terminal device receives the service data.

In the system architecture shown in FIG. 1b, for example, the AN device is a new radio node (new radio Node, gNB), the access and mobility management network element is an access and mobility management function (access and mobility management function, AMF) network element, the session management network element is a session management function (session management function, SMF) network element, the user plane network element is a user plane function (user plane function, UPF) network element, the policy control network element is a policy control function (policy control function, PCF) network element, the network slice selection network element is a network slice selection function (network slice selection function, NSSF) network element, the network repository function network element is a network repository function (network repository function, NRF) network element, the network data analytics network element is a network data analytics function (network data analytics function, NWDAF) network element, the unified data management network element is a unified data management (unified data management, UDM) network element, and the unified data repository network element is a unified data repository (unified data repository, UDR) network element.

In this embodiment of this application, the terminal device is a device having a wireless transceiver function. The terminal device may be deployed on land, including being deployed indoor, outdoor, handheld, wearable, or vehicle-mounted; or may be deployed on a water surface (for example, on a ship); or may be deployed in the air (for example, on an airplane, a balloon, or a satellite). The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home, or the like. An application scenario is not limited in embodiments of this application. Sometimes, the terminal device may also be referred to as a terminal, user equipment (user equipment, UE), a mobile station, a remote station, or the like. A specific technology, a device form, and a name that are used by the terminal device are not limited in embodiments of this application.

The AN device may be used for wireless side access of a terminal device. The AN device may be deployed in forms, including a central unit (central unit, CU) and a distributed unit (distributed unit, DU) in a separate scenario and a single station scenario. In the separate scenario, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a media access control (media access control, MAC) layer protocol, and a physical layer protocol. In the single station scenario, a single station may include a gNB, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, a base band unit (base band unit, BBU), and the like.

The access and mobility management network element may be configured to perform registration, mobility management, and tracking area update procedures of a terminal device in a mobile network. The access and mobility management network element terminates a non-access stratum (non-access stratum, NAS) message, completes registration management, connection management, reachability management, tracking area list (tracking area list, TA list) allocation, mobility management, and the like, and transparently routes a session management (session management, SM) message to the session management network element. In a 5th generation (5th generation, 5G) communication system, the access and mobility management network element may be an access and mobility management function (access and mobility management function, AMF) network element.

The session management network element may be configured to manage a session in a mobile network, for example, session establishment, modification, and release. A specific function of the session management network element may include: allocating an internet protocol (internet protocol, IP) address to a terminal device, selecting a user plane network element that provides a packet forwarding function, and the like. In a 5G communication system, the session management network element may be a session management function (session management function, SMF) network element.

The user plane network element is mainly used for processing a user packet, for example, forwarding, charging, or lawful interception. The user plane network element may also be referred to as a protocol data unit (protocol data unit, PDU) session anchor (PDU session anchor, PSA). In a 5G communication system, the user plane network element may be a user plane function (user plane function, UPF) network element.

The policy control network element includes a user subscription data management function, a policy control function, a charging policy control function, a quality of service (quality of service, QoS) control function, and the like. In a 5G communication system, the policy control network element may be a policy control function (policy control function, PCF) network element. It should be noted that in an actual network, a PCF may be divided into a plurality of entities based on layers or functions. For example, the PCF may be divided into a global PCF and a PCF in a slice, or may be divided into a session management PCF (Session Management PCF, SM-PCF) and an access management PCF (Access Management PCF, AM-PCF).

The network slice selection network element is mainly configured to select an appropriate network slice for a service of a terminal device. In a 5G communication system, the network slice selection network element may be a network slice selection function (network slice selection function, NSSF) network element.

In a 5G communication system, the network repository function network element may be a network repository function (network repository function, NRF) network element.

The network data analytics network element may be configured to collect data from each network function (network function, NF) and analyze the collected data. An NF may be a policy control network element, a session management network element, a user plane network element, an access and mobility management network element, an application function network element (by using a network capability exposure function network element), or the like. In a 5G communication system, the network data analytics network element may be a network data analytics function (network data analytics function, NWDAF) network element.

The unified data management network element may be mainly configured to manage subscription information of a terminal device. In a 5G communication system, the unified data management network element may be a unified data management (unified data management, UDM) network element.

The unified data repository network element may be configured to store structured data information, where the data information may include subscription information, policy information, network data or service data defined in a standard format, and the like. In a 5G communication system, the unified data repository network element may be a unified data repository (unified data repository, UDR) network element.

An operation, management, and maintenance (operation, administration, and maintenance, OAM) system may be configured to manage NFs such as a gNB, an AMF, an SMF, and a UPF, and may be configured to provide configuration data for the NFs.

The DN may be used to provide a data transmission service for the terminal device. The DN may be a public data network (public data network, PDN), such as the internet (internet), or may be a local access data network (LADN, Local Access Data Network), such as a network of a mobile edge computing (MEC, Mobile Edge Computing) node.

For ease of understanding of embodiments disclosed in this application, the following two points are described.
(1) In embodiments disclosed in this application, an NR network scenario in a wireless communication network is used as an example of scenarios for description. It should be noted that the solutions in embodiments disclosed in this application are applied to another wireless communication network, and a corresponding name may also be replaced with a name of a corresponding function in the another wireless communication network.
(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Related concepts in embodiments of this application are then briefly described.

### 1. Network slice (network slicing)

A network slice is a logical network that is obtained by dividing a communication network deployed by an operator and that has a specific network feature. Specifically, a physical network deployed by the operator may be abstracted into a plurality of network slices that are logically isolated from each other, and each network slice is an end-to-end logical network. In addition, each network slice may further flexibly provide one or more network services based on a requirement of a demander, and the network slice and another network slice in the network do not affect each other. For ease of description, in embodiments of this application, the network slice may also be referred to as a slice for short.

Generally, different network slices have different network features and performance requirements. For example, a network slice that provides an enhanced AR or VR service requires a feature of a high bandwidth and a low latency, and a network slice that provides an internet of things (internet of things, IOT) service requires a feature of supporting access of a large quantity of terminals, but has a low bandwidth and no requirement for a latency. Standard types of network slices defined currently include enhanced mobile broadband (enhanced mobile broadband, MBB), ultra-reliable and low-latency communication (Ultra-Reliable and Low-Latency Communication, URLLC), and massive internet of things (Massive Internet of Things, MIoT).

Different types of network slices are usually arranged in different frequency bands, and provide access by cells working in different frequency bands. This is because features of a wireless network vary with frequency bands. For example, the wireless network at a low and medium frequency band may have a feature of large coverage and low power consumption, but can support a low network access rate. The wireless network at a high frequency band can support a high access rate and a low latency, but has small coverage and high power consumption. Therefore, the network slice can be arranged in an appropriate frequency band based on a performance requirement of the network slice. For example, a network slice that provides an AR or VR service may be arranged to provide access by a cell working in a high frequency band, and a network slice that provides an IoT service may be arranged to provide access by a cell working in a low and medium frequency band. In addition, a same network slice may also be arranged to provide access by a plurality of cells working at a same frequency band or different frequency bands.

It can be learned that the plurality of network slices obtained by dividing the communication network are logically isolated from each other, and have different network features. In this way, the physical network deployed by the operator can meet differentiated network requirements of service data flows of different applications, thereby meeting a network differentiation requirement of a 5G mobile communication technology proposed by the 3rd Generation Partnership Project (3rd generation partnership project, 3GPP).

In addition, it further defines, in the 3GPP, that a terminal device and a network device may use network slice selection assistance information (network slice selection assistance information, NSSAI) to assist in selecting appropriate network slices for various application services. The NSSAI is formed by a group of single network slice selection assistance information (single network slice selection assistance information, S-NSSAI), that is, a set of one or more pieces of S-NSSAI may be referred to as the NSSAI. Each S-NSSAI may identify a network slice subscribed by a user.

### 2. Tracking area (tracking area, TA)

A TA includes coverage areas of one or more cells (cells). The TA can be identified by a tracking area code (tracking area code, TAC) or a tracking area identity (tracking area identity, TAI). The TAC and the TAI are collectively referred to as tracking area identities. The TAI includes a TAC and a network identifier of an operator, that is, the TAI may uniquely identify a TA in a wireless network deployed by an operator.

In one TA, one or more cells included in the TA may be managed by one access network device, or may be separately managed by a plurality of access network devices. The access network device may provide a wireless network access service in the managed cell. In addition, one or more access network devices that manage cells in one TA establish a connection to a same AMF. One AMF may establish connections to access network devices that manage cells in different TAs. In addition, each cell has a unique global cell identity (global cell identifier, GCI). In embodiments of this application, a cell managed by an access network device is a cell in a coverage area of the access network device, and the access network device may manage one or more cells.

All cells included in a same TA have a same capability of supporting a network slice, that is, all cells belonging to the same TA support one or more same network slices. In embodiments of this application, a network slice supported by the TA is a network slice supported by all cells in the TA. For example, a TA 1 supports a network slice 1 and a network slice 2, that is, all cells in the TA 1 support the network slice 1 and the network slice 2.

### 3. Network slice deployment

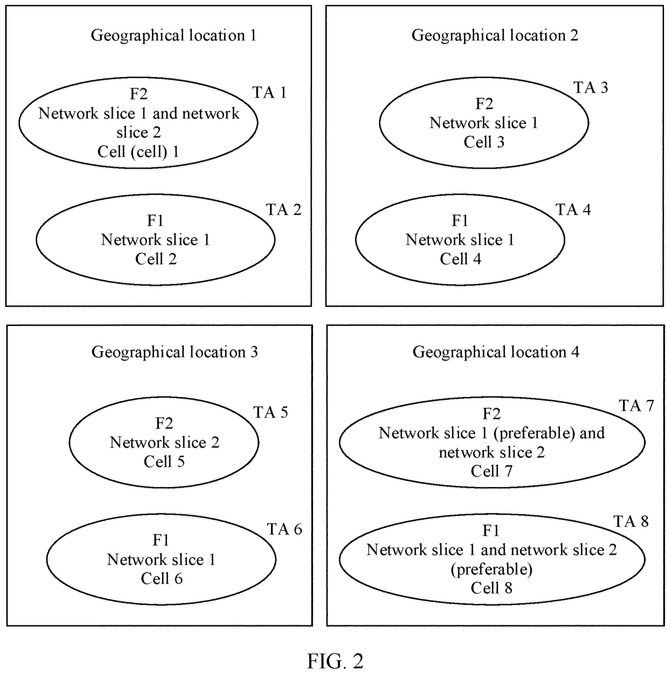

Deployment of a network slice in a TA and deployment of the network slice at each frequency band depend on network implementation. In FIG. 2, an example is used to further describe network slice deployment. FIG. 2 shows deployment of a network slice 1 and/or a network slice 2 in two TAs in each of four geographical locations (geographical locations). Cells in the two TAs work in a frequency band 1 (that is, F1) and a frequency band 2 (that is, F2). For example, the network slice 1 is a network slice of an eMBB type, and the network slice 2 is a network slice of a URLLC type. In addition, in FIG. 2, a "cell X" in any TA represents a group of cells that form the TA, that is, all cells included in the TA.

In FIG. 2, in a geographical location 1 (for example, a factory or a hospital), a cell 1 in a TA 1 works in F2 and supports both the network slice 1 and the network slice 2, and a cell 2 in a TA 2 works in F1 and supports the network slice 1. In a geographical location 2 (for example, a public area), a cell 3 in a TA 3 works in F2, a cell 4 in a TA 4 works in F1, and both the cell 3 and the cell 4 support the network slice 1 that provides a service for a smartphone user. F2 is used as a hotspot deployment frequency band. The cell 3 provides, by using the network slice 1, ultra-highspeed bandwidth access for the smartphone user who subscribes to a high-definition video service. The cell 4 provides, by using the network slice 1, common bandwidth access for another smartphone user. In a geographical location 3, a cell 5 in a TA 5 works in F2 and supports the network slice 2, and a cell 6 in a TA 6 works in F1 and supports the network slice 1. Based on deployment of the network slices in the geographical location 3, it can be learned that cells working in different frequency bands may support different network slices.

In a geographical location 4, a cell 7 in a TA 7 works in F2, a cell 8 in a TA 8 works in F1, and both the cell 7 and the cell 8 support both the network slice 1 and the network slice 2. The cell 7 preferably supports the network slice 1, and the cell 8 preferably supports the network slice 2. It can be learned that the network slice may provide services on a plurality of frequency bands, and some frequency bands preferably selected by the network slice may exist in the plurality of frequency bands. For example, a network slice that provides an AR or VR service may provide services at both a low and medium frequency band and a high frequency band. However, because a wireless network at a low and medium frequency band has a feature of large coverage and low power consumption, and the wireless network at a high frequency band has small coverage and high power consumption, when the network slice that provides the AR or VR service provided a service, performance at the low and medium frequency band is better than that at the high frequency band. Therefore, the low and medium frequency bands can be configured as a frequency band preferably selected by the network slice that provides the AR or VR service. In addition, for a network slice that can provide services at a plurality of frequency bands, a preferably selected frequency band may be determined based on a network slice type, or may be determined by a terminal device and a network device through negotiation, or may be manually determined by an operator, a technical person, or the like. This is not limited in embodiments of this application.

In addition, a customer may subscribe to a plurality of network slices from an operator, and a terminal device may access the plurality of network slices. For example, an automated guided vehicle (automated guided vehicle, AGV) in a factory may access both a network slice of an eMBB type and a network slice of a URLLC type. The network slice of the eMBB type is used for applications such as daily vehicle fault detection and maintenance reminder, and the network slice of the uRLLC type is used for automatic driving control. If the terminal device is located in the geographical location 1 in FIG. 2, when accessing a network in the cell 2, the terminal device can use only the network slice 1 of the eMBB type. When accessing the network in the cell 1, the terminal device may use both the network slice 1 of the eMBB type and the network slice 2 of the uRLLC type.

### 4. Slice group

A slice group is a group of one or more network slices that are identified according to a specific rule. A relationship between a slice group and each network slice included in the slice group may be represented as a mapping relationship between a slice group identity (network slice group ID, GID) of the slice group and S-NSSAI of the network slice. In embodiments of this application, the slice group to which the network slice belongs is a slice group including the network slice, and may be specifically represented as a GID to which S-NSSAI of the network slice is mapped.

A mapping relationship between a GID of a slice group and S-NSSAI of a network slice is valid based on a TA granularity. Different TAs may use different GIDs. However, because a coding length of a GID is limited, when a slice group is configured based on the TA granularity, different TAs may also use a same GID. In addition, in one TA, one network slice belongs to a maximum of one slice group.

Each cell broadcasts a GID of a slice group to which one or more supported network slices respectively belong, but does not broadcast S-NSSAI of the one or more supported network slices. This is because when the cell supports a large quantity of network slices, if the cell broadcasts the S-NSSAI of the one or more supported network slices, excessive resources are occupied and a length of broadcast information is limited. S-NSSAI of the network slice deployed by an operator in the TA is divided into a plurality of slice groups, and the cell broadcasts the slice group to which the one or more supported network slices belong. This can save resources. For example, in FIG. 2, a slice group to which the network slice 1 in the TA 1 to the TA 8 belongs is a slice group 1 (a GID of the slice group 1 is a GID 1), and a slice group to which a network slice 2 in the TA 1 to the TA 8 belongs is a slice group 2 (a GID of the slice group 2 is a GID 2). Therefore, the cell 1, the cell 7, and the cell 8 broadcast the GID 1 and the GID 2, the cell 2, the cell 3, the cell 4, and the cell 6 broadcast the GID 1, and the cell 5 broadcasts the GID 2.

### 5. Network slice selection

Network slice selection is mainly used to determine a network slice that a terminal device is allowed to access. Specifically, network slice selection includes: The terminal device selects to camp on a cell, and then sends registration request information to a core network by using an access network device that manages the cell, where the registration request message may carry NSSAI (namely, requested NSSAI including one or more pieces of S-NSSAI) of a network slice that requests to access. Then, an NSSF or an AMF in the core network determines whether the network slice that the terminal device requests to access belongs to a network slice that the terminal device subscribes to, and determines, when the network slice that the terminal device requests to access belongs to the network slice that the terminal device subscribes to, based on a network slice supported by a cell currently accessed by the terminal device, the network slice (namely, allowed NSSAI) that the terminal device is allowed to access.

After the terminal device performs network slice selection, the terminal device may successfully register with the network slice included in the allowed NSSAI. Subsequently, the terminal device may establish a protocol data unit session (protocol data unit session, PDU Session) by using these network slices, and perform transmission of a service packet by using these network slices.

Currently, in a process of performing cell selection or cell reselection, the terminal device determines, based on a slice group to which a network slice configured for the terminal device belongs and a slice group to which a network slice supported by the cell that is broadcast by each cell belongs, a cell that broadcasts the slice group to which a first network slice belongs, and accesses the first network slice in the cell. The first network slice is the network slice that the terminal device expects to access, and the first network slice belongs to the network slice configured for the terminal device.

When there are a plurality of cells that support the first network slice, the operator may expect the terminal device to preferably access the first network slice in a cell. However, in the foregoing cell selection or cell reselection manner, the terminal device cannot determine, from the plurality of cells that support the first network slice, the cell that the operator expects the terminal device to preferably select, and therefore may access the first network slice not in the cell that the operator expects the terminal device to preferentially select.

For example, in the geographical location 4 in FIG. 2, the operator expects that the terminal device preferably accesses the network slice 1 in the cell 7, and preferably accesses the network slice 2 in the cell 8. GIDs of slice groups to which the network slice 1 belongs in the TA 7 and the TA 8 are the same, and GIDs of slice groups to which the network slice 2 belongs in the TA 7 and the TA 8 are the same. Because the GIDs broadcast by the cell 7 and the cell 8 are the same, in the foregoing cell selection or cell reselection manner, the terminal device may access the network slice 1 in the cell 8 instead of accessing the network slice 1 in the cell 7, and may access the network slice 2 in the cell 7 instead of accessing the network slice 2 in the cell 8.

For another example, in the geographical location 2 in FIG. 2, the operator expects that a terminal device that subscribes to a high-definition video service preferably accesses the network slice 1 in the cell 3, and another common terminal preferably accesses the network slice 1 in the cell 4. GIDs of slice groups to which the network slice 1 belongs in TA 3 and TA 4 are the same. Because GIDs broadcast by the cell 3 and the cell 4 are the same, the terminal device that subscribes to the high-definition video service may access the network slice 1 in the cell 4 instead of accessing the network slice 1 in the cell 3 in the foregoing cell selection or cell reselection manner, and the another common terminal may access the network slice 1 in the cell 3 instead of accessing the network slice 1 in the cell 4 in the foregoing cell selection or cell reselection manner.

An embodiment of this application provides a cell determining method 100. In the cell determining method 100, a terminal device determines a first slice group including a first network slice, and the first network slice is a network slice to be accessed by the terminal device. The terminal device determines a first cell from one or more cells, where a relative priority of the first slice group in the first cell is highest in the one or more cells, or a dedicated priority corresponding to the first slice group in the first cell is highest in the one or more cells. The terminal device accesses the first network slice in the first cell. It can be learned that the terminal device can determine, based on a relative priority of a first slice group in each cell or a dedicated priority corresponding to a first slice group in each cell, a cell preferably selected by the terminal device for accessing the first network slice.

An embodiment of this application provides a cell determining method 400. In the cell determining method 400, an access network device broadcasts slice groups in one or more cells. A broadcast slice group in each cell is a slice group to which a network slice that is preferably supported by the cell belongs. According to the method, a cell selected by the terminal device can be a cell that preferably supports a first network slice.

The following further describes embodiments of this application with reference to the accompanying drawings.

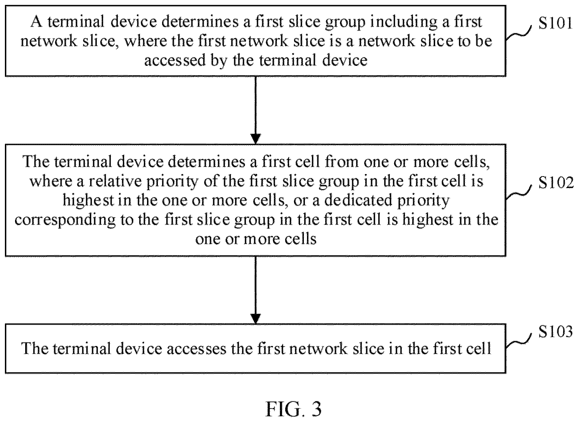

FIG. 3 is a schematic flowchart of a cell determining method 100 according to an embodiment of this application. The cell determining method 100 includes the following steps.

S101: A terminal device determines a first slice group including a first network slice, where the first network slice is a network slice to be accessed by the terminal device.

In an optional implementation, before the terminal device determines the first slice group including the first network slice, the cell determining method may further include: The terminal device determines the first network slice. The terminal device may determine the first network slice in the following several optional implementations.

Implementation 1.1: The terminal device determines a to-be-accessed network slice as the first network slice. It can be learned that when there is one to-be-accessed network slice, the terminal device uses the to-be-accessed network slice as the first network slice.

Implementation 1.2: When there are a plurality of to-be-accessed network slices, the terminal device selects, as the first network slice from the plurality of to-be-accessed network slices, a network slice in which a PDU session is established. For example, the network slices to be accessed by the terminal device include a network slice 1 and a network slice 2; and if the terminal device has established a PDU session in the network slice 1, and has not established a PDU session in the network slice 2, the terminal device uses the network slice 1 as the first network slice.

Implementation 1.3: When there are a plurality of network slices in which a PDU session is established in to-be-accessed network slices, the terminal device selects, as the first network slice from the plurality of network slices, a network slice in which the PDU session is in an active state. For example, the network slices to be accessed by the terminal device include a network slice 1 and a network slice 2. The terminal device respectively establishes PDU sessions in the network slice 1 and the network slice 2, and the PDU session established by the terminal device in the network slice 2 is in the active state. In this case, the terminal device may use the network slice 2 as the first network slice.

Implementation 1.4: When there are a plurality of to-be-accessed network slices, the terminal device selects a network slice with a highest priority from the network slices as the first network slice. For example, the network slices to be accessed by the terminal device include a network slice 1 and a network slice 2. A network sets a priority of the network slice 1 to be higher than a priority of the network slice 2 based on importance of a service. In this case, the terminal device may use the network slice 1 as the first network slice.

It can be learned that, based on Implementations 1.2, 1.3, and 1.4, when there are a plurality of to-be-accessed network slices, the terminal device may preferably select one of the network slices for cell selection or cell reselection.

In an optional implementation, that the terminal device determines the first slice group including the first network slice may include: The terminal device obtains slice configuration information; and the terminal device selects, based on the slice configuration information, a slice group including the first network slice as the first slice group. Optionally, the slice configuration information may be represented in a form of a list. A representation form of the slice configuration information is not limited in this application. The slice configuration information has the following several optional implementations.

Implementation 2.1: The slice configuration information indicates a slice group, in a TA, to which a network slice configured for the terminal device belongs. Correspondingly, the first slice group is a slice group, in a TA, including the first network slice. GIDs of first slice groups in different TAs may be the same or may be different. In other words, GIDs of first slice groups in cells included in different TAs may be the same or may be different. Specifically, the slice configuration information may include a GID of the slice group, in the TA, to which the network slice configured for the terminal device belongs. Optionally, there may be one or more TAs. In this case, the slice configuration information may indicate a slice group, in each of the one or more TAs, to which a network slice configured for the terminal device belongs.

For example, the network slices configured for the terminal device are a network slice 1 (corresponding to S-NSSAI #1) and a network slice 2 (corresponding to S-NSSAI #2). The network slice 1 in a TA 1 belongs to a slice group 1 (corresponding to a GID 1), and the network slice 2 in a TA 1 belongs to a slice group 2 (corresponding to a GID 2). The network slice 1 in a TA 2 belongs to a slice group 2 (corresponding to the GID 2), and the TA 2 does not support the network slice 2. In this case, the slice configuration information may be shown in Table 1.

**Table 1**

| S-NSSAI of the network slice configured for the terminal device | GID of the slice group to which the network slice in the TA 1 belongs | GID of the slice group to which the network slice in the TA 2 belongs |
|---|---|---|
| S-NSSAI #1 | GID 1 | GID 2 |
| S-NSSAI #2 | GID 2 | Not supported |

Based on Table 1, when the network slice 1 is used as the first network slice, the first slice group includes the slice group 1 in the TA 1 and the slice group 2 in the TA 2. When the network slice 2 is used as the first network slice, the first slice group includes the slice group 2 in the TA 1.

Implementation 2.2: When slice groups in different TAs have different GIDs, the slice configuration information may indicate a slice group to which a network slice configured for the terminal device belongs. For example, GIDs of two slice groups in a TA 1 are a GID 1 and a GID 2, and a GID of a slice group in a TA 2 is a GID 3. This indicates that GIDs used by slice groups in the TA 1 and the TA 2 are different. For another example, GIDs of two slice groups in a TA 1 are a GID 1 and a GID 2, and a GID of a slice group in a TA 2 is a GID 2. This indicates that GIDs used by slice groups in the TA 1 and the TA 2 are the same.

Correspondingly, the first slice group is a slice group including the first network slice. Specifically, the slice configuration information may include a GID of the slice group to which the network slice configured for the terminal device belongs. For example, the network slices configured for the terminal device are a network slice 1 and a network slice 2. ATA 1 includes a slice group 1 (corresponding to a GID 1) to which the network slice 1 belongs, and a slice group 2 (corresponding to a GID 2) to which the network slice 2 belongs. A TA 2 includes a slice group 3 (corresponding to a GID 3) to which the network slice 1 belongs. It can be learned that the GIDs used by the slice groups in the TA 1 are different from the GID used by the slice group in the TA 2. In this case, the slice configuration information may be shown in Table 2.

**Table 2**

| S-NSSAI of the network slice configured for the terminal device | GID of the slice group to which the network slice belongs |
|---|---|
| S-NSSAI #1 | GID 1 and GID 3 |
| S-NSSAI #2 | GID 2 |

Based on Table 2, when the network slice 1 is used as the first network slice, the first slice group includes the slice group 1 and the slice group 2. When the network slice 2 is used as the first network slice, the first slice group includes the slice group 3.

In addition, in Implementation 2.1 and Implementation 2.2, there may be one or more network slices configured for the terminal device. Correspondingly, in Implementation 2.1, the slice configuration information may indicate slice groups, in the TA, to which the one or more network slices configured for the terminal device belong. In Implementation 2.2, the slice configuration information may indicate slice groups to which the one or more network slices configured for the terminal device belong.

Optionally, in Implementation 2.1 and Implementation 2.2, the slice configuration information may further include S-NSSAI (Configured NSSAI) of the one or more network slices configured for the terminal device. When a service network in which the terminal device is located is a home public land mobile network (home public land mobile network, HPLMN), the S-NSSAI of the one or more network slices configured for the terminal device is one or more pieces of subscribed S-NSSAI (subscribed S-NSSAI) of the terminal device. When a service network in which the terminal device is located is a visited public land mobile network (visited public land mobile network, VPLMN), the S-NSSAI of the one or more network slices configured for the terminal device is S-NSSAI that is separately mapped to one or more pieces of subscribed S-NSSAI of the terminal device in the VPLMN.

In an optional implementation, the slice configuration information may be stored by the terminal device. In this case, the terminal device may directly obtain the slice configuration information from a memory. In another optional implementation, the slice configuration information may be received by the terminal device from an access network device. For example, for the terminal device that enters a current service network for the first time, is just powered on, or just re-enters a service area from a no-service area without wireless network coverage, the terminal device may not store the slice configuration information. In this case, the terminal device may obtain the slice configuration information from the access network device. For example, a specific procedure in which the terminal device obtains the slice configuration information from the access network device may be as follows:

The terminal device selects, based on a signal level of a cell, a cell with best signal quality to establish an RRC connection, and then sends a registration request message to the access network device that manages the cell. The registration request message does not carry S-NSSAI (namely, Requested NSSAI) of a network slice that requests to access. The access network device forwards, to a connected AMF, the registration request message from the terminal device. The AMF obtains, from UDM based on a subscription permanent identifier (subscription permanent identifier, SUPI), of the terminal device, carried in the registration request message, information about a network slice that the terminal device subscribes to, where the information about the network slice indicates the one or more network slices configured for the terminal device and a default slice in the one or more network slices. The AMF uses the default slice of the terminal device as a network slice that the terminal device requests to access, and requests an NSSF to perform network slice selection. In addition, the NSSF or the AMF determines, from pre-configured data based on the information about the network slice that the terminal device subscribes to, the slice group, in the TA, to which the network slice configured for the terminal device belongs. The pre-configured data indicates a slice group to which a pre-configured network slice belongs, and may be obtained from OAM. The AMF or the NSSF sends a registration response message or configuration update message to the terminal device by using the access network device. The registration response message or the configuration update message carries the slice configuration information. The terminal device may receive the slice configuration information from the access network device.

S102: The terminal device determines a first cell from one or more cells, where a relative priority of the first slice group in the first cell is highest in the one or more cells, or a dedicated priority corresponding to the first slice group in the first cell is highest in the one or more cells. The one or more cells are cells that can receive broadcast information and support the first network slice.

The one or more cells are cells in which the terminal device can receive the broadcast information and a TAC carried in the broadcast information identifies a first tracking area, and the first tracking area is a TA that can support the first network slice. In other words, if the TAC carried in the broadcast information received by the terminal device identifies the first tracking area, it indicates that a cell corresponding to the broadcast information belongs to the first TA, that is, the cell supports the first network slice.

Alternatively, the one or more cells are cells in which the terminal device can receive broadcast information and the broadcast information carries the first slice group. That the broadcast information carries the first slice group may mean that the broadcast information carries a GID of the first slice group. In this implementation, it needs to be agreed in advance that the access network device broadcasts a slice group of any cell, to indicate that the cell supports all network slices included in the slice group. In this case, if the broadcast information received by the terminal device carries the first slice group, it indicates that the cell corresponding to the broadcast information supports all the network slices included in the first slice group, for example, supports the first network slice.

For example, it is agreed in advance that the access network device broadcasts the slice group of any cell, to indicate that the cell supports all the network slices included in the slice group, and both a network slice 1 and a network slice 2 belong to a slice group 1 (corresponding to a GID 1). If the first network slice 1 is the first network slice, when the received broadcast information carries the GID 1, the terminal device may determine that the cell corresponding to the broadcast information supports the network slice 1 and the network slice 2, that is, may determine that the cell corresponding to the broadcast information supports the first network slice.

In an optional implementation, the cell determining method may further include: The terminal device obtains TA information; and determines, based on the TA information, a TA that can support the first network slice, as a first TA. Optionally, the TA information may be represented in a form of a list. A representation form of the TA information is not limited in this embodiment of this application.

The TA information may indicate a TA that supports the network slice configured for the terminal device; or the TA information may indicate a network slice that is configured for the terminal device and that is supported by a TA. For example, the network slices configured for the terminal device include a network slice 1 (corresponding to S-NSSAI #1) and a network slice 2 (corresponding to S-NSSAI #2), TAs supporting the network slice 1 include a TA 1 (corresponding to a TAC 1) and a TA 2 (corresponding to a TAC 2), and TAs supporting the network slice 2 include the TA 1 and a TA 3 (corresponding to a TAC 3).

If the TA information indicates the TAs that support the network slices configured for the terminal device, the TA information may be shown in Table 3.

**Table 3**

| S-NSSAI of the network slice configured for the terminal device | List of supported TACs |
|---|---|
| S-NSSAI #1 | TAC 1 and TAC 2 |
| S-NSSAI #2 | TAC 1 and TAC 3 |

If the TA information indicates the network slices that are configured for the terminal device and that are supported by the TAs, the TA information may be shown in Table 4.

**Table 4**

| TAC | List of supported network slices configured for the terminal device |
|---|---|
| TAC 1 | S-NSSAI #1 and S-NSSAI #2 |
| TAC 2 | S-NSSAI #1 |
| TAC 3 | S-NSSAI #2 |

Based on Table 3 or Table 4, if the first network slice is the network slice 1, the terminal device may determine both the TA 1 and the TA 2 as the first TA. If the first network slice is the network slice 2, the terminal device may determine that both the TA 1 and the TA 3 as the first TA.

In an optional implementation, the TA information may be stored by the terminal device. In this case, the terminal device may directly obtain the TA information from a memory. In another optional implementation, the TA information may be received by the terminal device from the access network device. For example, a specific procedure in which the terminal device obtains the TA information from the access network device may be as follows:

The terminal device sends a current location of the terminal device to the access network device. The access network device forwards the current location of the terminal device to the connected AMF, and the AMF sends the current location of the terminal device to the NSSF. The NSSF determines, based on the current location of the terminal device and geographical coverage areas of the one or more TAs, a TA that covers the current location of the terminal device, or determines a TA that covers the current location of the terminal device and a neighboring TA that is within a preset range from the TA. The NSSF determines, based on the determined network slice supported by the TA, a network slice, configured for the terminal device, supported by the TA, and determines the TA information. The NSSF sends the TA information to the AMF, and then the AMF sends the TA information to the terminal device by using the access network device. The terminal device may receive the TA information from the access network device.

In an optional implementation, the one or more cells in step S103 work at a first frequency band, and the first frequency band is preset or configured by the access network device. It can be learned that the terminal device can select the first cell from the one or more cells working at a same frequency band. The relative priority of the first slice group in the first cell is highest in the one or more cells working at the first frequency band, or the dedicated priority corresponding to the first slice group in the first cell is highest in the one or more cells working at the first frequency band.

Optionally, that the access network device configures the first frequency band may include the following procedure: A core network device sets a radio access technology/frequency band selection priority (RAT/frequency selection priority, RFSP) for the terminal device, and sends the RAT/RFSP to the access network device. The access network device may determine a dedicated cell camping policy and an inter-frequency inter-RAT handover policy for the terminal based on the RFSP, to configure the first frequency band for the terminal device.

In an optional implementation, the relative priority of the first slice group is carried in the broadcast information. In this case, the terminal device may select, based on the relative priority of the first slice group in the cell that is carried in the broadcast information of the one or more cells, a cell that has a highest relative priority in the first slice group carried in the broadcast information as the first cell. The one or more cells herein are the one or more cells in step S102. That is, the one or more cells are the cells in which the terminal device can receive the broadcast information and the TAC carried in the broadcast information identifies the first tracking area, and the first tracking area is the TA that can support the first network slice, or the one or more cells are the cells in which the terminal device can receive the broadcast information and the broadcast information carries the first slice group.

For example, the one or more cells include a cell 1, a cell 2, and a cell 3. Broadcast information of the cell 1 carries a relative priority #1 of the first slice group, broadcast information of the cell 2 carries a relative priority #2 of the first slice group, broadcast information of the cell 3 carries a relative priority #3 of the first slice group, the relative priority #2 is higher than the relative priority #1, and the relative priority #1 is higher than the relative priority #3. It can be learned that the relative priority of the first slice group carried in the broadcast information of the cell 2 is highest in the cell 1, the cell 2, and the cell 3. In this case, the terminal device may determine the cell 2 as the first cell.

In an optional implementation, the dedicated priority corresponding to the first slice group is configured by a network device for the terminal device. Optionally, the cell determining method 100 may further include: The terminal device receives dedicated priority information from the network device, where the dedicated priority information includes a dedicated priority corresponding to the slice group to which the network slice configured for the terminal device belongs, or the dedicated priority information includes a dedicated priority corresponding to the slice group, in the TA, to which the network slice configured for the terminal device belongs; and the terminal device determines, based on the dedicated priority information, the dedicated priority corresponding to the first slice group in each cell. In this case, the terminal device may select, based on the dedicated priority corresponding to the first slice group in each of the one or more cells, a cell with a highest dedicated priority corresponding to the first slice group as the first cell. The one or more cells herein are the one or more cells in step S102.

For example, the one or more cells include a cell 1, a cell 2, and a cell 3. The first slice group in the cell 1 corresponds to a dedicated priority #1, the first slice group in the cell 2 corresponds to a dedicated priority #2, and the first slice group in the cell 3 corresponds to a dedicated priority #3. In addition, the dedicated priority #2 is higher than the dedicated priority #1, and the dedicated priority #1 is higher than the dedicated priority #3. It can be learned that the dedicated priority corresponding to the first slice group in the cell 2 is highest in the cell 1, the cell 2, and the cell 3. In this case, the terminal device may determine the cell 2 as the first cell.

S103: The terminal device accesses the first network slice in the first cell.

In an optional implementation, that the terminal device accesses the first network slice in the first cell may include: The terminal device establishes an RRC connection to the first cell to access the first cell. The terminal device sends registration request information or registration update information to an access network device that manages the first cell, where requested NSSAI carried in the registration request message or the registration update message includes the first network slice. The access network device that manages the first cell sends the registration request message or the registration update message to a connected AMF, and the AMF performs a network slice selection procedure by using an NSSF, to select the network slice for the terminal device. After accepting a registration request from the terminal device, the AMF sends allowed NSSAI to the terminal by using the access network device, where the allowed NSSAI includes the first network slice. Then, the terminal device may access the first network slice in the first cell.

In conclusion, in the cell determining method 100, the terminal device determines the first slice group including the first network slice, where the first network slice is the network slice to be accessed by the terminal device; determines the first cell from the one or more cells, where the relative priority of the first slice group in the first cell is highest in the one or more cells, or the dedicated priority corresponding to the first slice group in the first cell is highest in the one or more cells; and then, accesses the first network slice in the first cell, where the one or more cells are the cells in which the terminal device can receive the broadcast information and the TAC carried in the broadcast information identifies the first tracking area, and the first tracking area is the TA that can support the first network slice, or the one or more cells are the cells in which the terminal device can receive the broadcast information and the broadcast information carries the first slice group. It can be learned that the terminal device can determine, based on a relative priority of a first slice group in each cell or a dedicated priority corresponding to a first slice group, a cell preferably selected by the terminal device for accessing the first network slice. The cell preferably selected by the terminal device for accessing the first network slice can better meet a performance requirement of the first network slice, and improve performance of the first network slice, so that the first network slice can provide a better network service for the terminal device.

In the cell determining method 100 shown in FIG. 3, the relative priority of the first slice group is broadcast by the access network device, or the dedicated priority corresponding to the first slice group is configured by the network device for the terminal device, so that the network can control the terminal device to preferably select the specific cell to access the first network slice.

An embodiment of this application further provides a cell determining method 200, to further describe a procedure in which a terminal device performs cell selection or cell reselection based on a relative priority broadcast by an access network device. In addition, an embodiment of this application further provides a cell determining method 300, to further describe a related procedure in which a terminal device performs cell selection or cell reselection based on a dedicated priority configured by a network device.

The following further describes the cell determining method 200 and the cell determining method 300 with reference to the accompanying drawings.

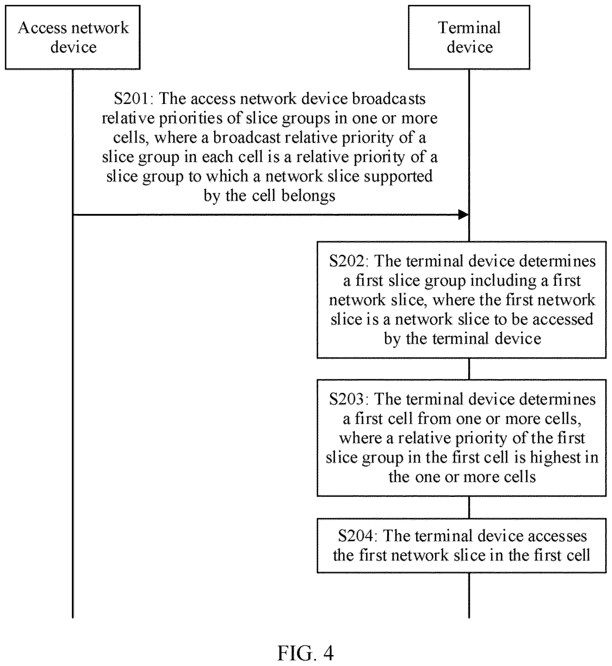

FIG. 4 is a schematic flowchart of the cell determining method 200 according to this embodiment of this application. The cell determining method 200 is described from a perspective of interaction between the terminal device and the access network device. The cell determining method 200 includes the following steps.

S201: The access network device broadcasts relative priorities of slice groups in one or more cells, where a broadcast relative priority of a slice group in each cell is a relative priority of a slice group to which a network slice supported by the cell belongs.

The relative priorities of the slice groups in the one or more cells broadcast by the access network device are used by the terminal device to perform cell selection or cell reselection. The one or more cells in step S101 are one or more cells managed by the access network device. For example, if the cells managed by the access network device include a cell 1 and a cell 2, the access network device broadcasts a relative priority of a slice group to which a network slice supported by the cell 1 belongs and a relative priority of a slice group to which a network slice supported by the cell 2 belongs.

In addition, in addition to broadcasting the relative priorities of the slice groups in one or more cells, the access network device may further broadcast a slice group in each cell. The broadcast slice group in each cell includes the slice group to which a network slice supported by the cell belongs. In this embodiment of this application, that the access network device broadcasts the slice group means that the access network device broadcasts the GID of the slice group.

Optionally, the access network device may further broadcast a tracking area identity of a TA to which each cell belongs. Optionally, when it is agreed in advance that a slice group of any cell can be broadcast to indicate that the cell supports all network slices included in the slice group, the access network device may not need to broadcast a tracking area identity of a TA to which each cell belongs. For example, a network slice 1 and a network slice 2 form a slice group 1. If a cell 1 supports both the network slice 1 and the network slice 2, an access network device that manages the cell 1 may broadcast the slice group 1 in the cell 1. If the cell 1 supports only the network slice 1 or supports only the network slice 2, the access network device that manages the cell 1 does not broadcast the slice group 1 in the cell 1.

In addition, each cell may support one or more network slices. Correspondingly, the relative priority that is of the slice group in each cell and that is broadcast by the access network device includes a relative priority of a slice group to which one or more network slices supported by the cell belong. The broadcast slice group in each cell includes a slice group to which one or more network slices supported by the cell belong.

Optionally, the relative priority of the slice group may be represented in a form of a positive number value, and a positive number value is used to represent a relative priority. For example, a smaller positive number value indicates a higher relative priority. A relative priority of a slice group 1 to which a network slice 1 in a cell 1 belongs is 1, and a relative priority of a slice group 2 to which a network slice 1 in a cell 2 belongs is 2. This indicates that the relative priority of the slice group 1 to which the network slice 1 in the cell 1 belongs is higher than the relative priority of the slice group 2 to which the network slice 1 in the cell 2 belongs. In addition, a representation form of the relative priority of the slice group is not limited in this application. For ease of description, in examples of the relative priority in embodiments of this application, a smaller positive number value indicates a higher relative priority of a slice group.

In an optional implementation, the relative priorities of the slice groups in the one or more cells are carried in broadcast information. Optionally, the broadcast information may be a system information block (system information block, SIB).

In an optional implementation, the relative priorities of the slice groups in the one or more cells are configured by the access network device. Optionally, in each of the one or more cells, the access network device determines a high relative priority for the slice group to which the network slice preferably supported by the cell belongs, and determines a low relative priority for a slice group to which a network slice other than the preferably supported network slice belongs. In other words, a relative priority of a slice group to which a network slice preferably supported by each of the one or more cells belongs is higher than a relative priority of a slice group to which a network slice other than the preferably supported network slice in the cell belongs. In this implementation, when accessing a specific network slice, a network controls most terminal devices to select, based on a difference between relative priorities, of slice groups to which the network slice belongs, broadcast by the one or more cells, the cell that preferably supports the network slice, and avoids selecting a cell that does not preferably support the network slice as much as possible.

Optionally, before the access network device broadcasts the relative priorities of the slice groups in the one or more cells, the method may further include: The access network device determines frequency band priority information of one or more network slices, where frequency band priority information of each network slice includes frequency band priorities of the network slice in one or more frequency bands. The access network device determines, for each of the one or more cells based on a frequency band priority of a network slice supported by the cell in a working frequency band of the cell, a relative priority of a slice group to which the network slice belongs. Optionally, frequency band priority information of each network slice is a frequency band list in which performance or experience of the network slice at each of one or more working frequency bands is sorted in descending order. For each of the one or more cells, the access network device determines, based on a location of the working frequency band of the cell in the frequency band list of the network slice, a relative priority of a slice group to which the network slice belongs.

It can be learned that in this implementation, the access network device can determine, based on the frequency band priority information of each network slice and a working frequency band of each cell, the relative priority of the slice group to which the network slice supported by each cell belongs. A higher frequency band priority of a working frequency band of a cell that supports a network slice in the one or more frequency bands, or a location nearer to the front in the frequency band list indicates that the cell can better meet a performance requirement of the network slice. In this case, a higher relative priority of the slice group to which the network slice belongs in the cell can be configured. Therefore, the terminal device can select, when determining a cell, a cell that can better meet the performance requirement or an experience requirement of the to-be-accessed network slice, and obtain a better network service provided by the to-be-accessed network slice.

Optionally, the frequency band priority may be represented in a form of a positive number value, and a positive number value is used to represent a frequency band priority. For example, a smaller positive number value indicates a higher frequency band priority. A frequency band priority of a network slice 1 in a frequency band 1 (namely, F1) is 1, and a frequency band priority of the network slice 1 in a frequency band 2 (namely, F2) is 2. It indicates that the frequency band priority of the network slice 1 in F1 is higher than the frequency band priority of the network slice 1 in F2. In addition, a representation form of the frequency band priority is not limited in this application. For ease of description, in examples of the frequency band priority in embodiments of this application, a smaller positive number indicates a higher frequency band priority.

Optionally, when configuring the relative priority of the slice group to which the network slice supported by each cell belongs, the access network device may use a frequency band priority order of the network slice in the one or more frequency bands as a relative priority order of the slice group to which the network slice belongs in a cell that works in each of the one or more frequency bands.

For example, frequency band priority information of a network slice 1 includes the following: A frequency band priority of the network slice 1 at a frequency band 1 (namely, F1) is 3, a frequency band priority at a frequency band 2 (namely, F2) is 1, and a frequency band priority at a frequency band 3 (namely, F3) is 2. It can be learned that the frequency band priority of the network slice 1 at F2 is higher than the frequency band priority at F3, and the frequency band priority of the network slice 1 at F3 is higher than the frequency band priority of the network slice 1 at F1. If a cell 1 working at F1, a cell 2 working at F2, and a cell 3 working at F3 all support the network slice 1, the access network device may configure that the relative priority of a slice group to which the network slice 1 in the cell 2 belongs is higher than the relative priority of a slice group to which the network slice 1 in the cell 3 belongs, and the relative priority of the slice group to which the network slice 1 in the cell 3 belongs is higher than the relative priority of a slice group to which the network slice 1 in the cell 1 belongs.

In addition, in the foregoing implementation, the network slice preferably supported by each cell may be determined in the following several implementations.

Implementation 3.1: The network slice preferably supported by each cell may be manually determined. For example, a cell 1 supports a network slice 1 and a network slice 2, and an operator or a skilled person may configure, based on a requirement of the operator or the skilled person, the cell 1 to preferably support the network slice 1 and non-preferably support the network slice 2.

Implementation 3.2: A frequency band priority of the network slice preferably supported by each cell in a working frequency band of the cell is highest in one or more frequency bands. Frequency band priorities of each network slice in one or more frequency bands are determined based on frequency band priority information of the network slice. For example, frequency band priority information of a network slice 1 includes the following: A frequency band priority of the network slice 1 at a frequency band 1 (namely, F1) is 2, a frequency band priority at a frequency band 2 (namely, F2) is 1, and both a cell 1 working at F1 and a cell 2 working at F2 support the network slice 1. It can be learned that the frequency band priority of the network slice 1 in a working frequency band of the cell 1 is not highest at F1 and F2, and the frequency band priority of the network slice 1 in a working frequency band of the cell 2 is highest at F1 and F2. In this case, the network slice 1 is not a network slice preferably supported by the cell 1, but a network slice preferably supported by the cell 2.

In another optional implementation, the relative priorities of the slice groups in the one or more cells may alternatively be manually configured. For example, both a cell 1 and a cell 2 support a network slice 1, and an operator or a skilled person expects that a terminal device in an overlapping coverage area of the cell 1 and the cell 2 preferably accesses the network slice 1 in the cell 1. In this case, a relative priority of a slice group to which the network slice 1 in the cell 1 belongs may be configured to be higher than a relative priority of a slice group to which the network slice 1 in the cell 2 belongs.

In an optional implementation, the cell determining method 100 may further include: The access network device reports to a connected AMF in a next generation (next generation, NG) setup procedure, a tracking area identity of a TA to which a managed cell belongs and S-NSSAI of a network slice supported by a cell in the TA.

Optionally, when receiving the tracking area identity of the TA to which the cell managed by the access network device belongs and the S-NSSAI of the network slice supported by the cell in the TA, or when the network slice supported by the cell in the TA changes, the AMF sends, to an NSSF, the tracking area identity of the TA to which the cell managed by the access network device belongs and the S-NSSAI of the network slice supported by the cell in the TA. The NSSF subscribes, in advance from the AMF, to a tracking area identity of a TA managed by the AMF and a network slice supported by a cell in the TA. Optionally, the AMF may exchange and record, with another AMF, the tracking area identity of the TA to which the cell managed by the access network device belongs and the S-NSSAI of the network slice supported by the cell in the TA. The AMF may exchange the foregoing information with the another AMF by using the NSSF. In addition, after deployment of the network slice changes, the AMF may update recorded information by using the foregoing operation again.

Optionally, the access network device may further report, to the connected AMF, information about a slice group in a TA. The information about the slice group in the TA includes a GID of the slice group to which a network slice supported by a cell in the TA belongs, and may be represented as a correspondence of {S-NSSAI, GID}. Correspondingly, the AMF may further exchange with another AMF, the information about the slice group in the TA.

S202: The terminal device determines a first slice group including a first network slice, where the first network slice is a network slice to be accessed by the terminal device. There may be one or more first slice groups.

In an optional implementation, before the terminal device determines the first slice group including the first network slice, the cell determining method may further include: The terminal device determines a to-be-accessed network slice as the first network slice; when there are a plurality of to-be-accessed network slices, the terminal device selects, as the first network slice from the plurality of to-be-accessed network slices, a network slice in which a PDU session is established; when there are a plurality of network slices in which a PDU session is established in to-be-accessed network slices, the terminal device selects, as the first network slice from the plurality of network slices, a network slice in which the PDU session is in an active state; or when there are a plurality of to-be-accessed network slices, the terminal device selects a network slice with a highest priority from the network slices as the first network slice. For related descriptions of the first network slice, refer to the related descriptions in the cell determining method 100. Details are not described herein again.

In an optional implementation, that the terminal device determines the first slice group including the first network slice may include: The terminal device obtains slice configuration information; and the terminal device selects, based on the slice configuration information, a slice group including the first network slice as the first slice group. Optionally, the slice configuration information may be stored by the terminal device, or may be received by the terminal device from the access network device. For related descriptions of the slice configuration information, refer to the related descriptions in the cell determining method 100. Details are not described herein again.

In addition, a sequence of step S201 and step S202 is not limited in this embodiment of this application. In step S201, the access network device may alternatively periodically broadcast relative priorities of slice groups in one or more cells, irregularly broadcast relative priorities of slice groups in one or more cells, or the like.

S203: The terminal device determines a first cell from one or more cells, where a relative priority of the first slice group in the first cell is highest in the one or more cells.

For example, the one or more cells include a cell 1, a cell 2, and a cell 3. A relative priority of the first slice group in the cell 1 is 2, a relative priority of the first slice group in the cell 2 is 1, and a relative priority of the first slice group in the cell 3 is 3. In this case, the terminal device determines, from the cell 1, the cell 2, and the cell 3, that the cell 2 is the first cell.

Different from the one or more cells in step S201, the one or more cells in step S203 are cells that can receive broadcast information and support the first network slice. Optionally, the one or more cells in step S203 are cells in which the terminal device can receive broadcast information and a TAC carried in the broadcast information identifies a first tracking area, and the first tracking area is a TA that can support the first network slice. Alternatively, the one or more cells in step S203 are cells in which the terminal device can receive broadcast information and the broadcast information carries the first slice group. For related descriptions of the one or more cells, refer to the related descriptions in the cell determining method 100. Details are not described herein again.

In an optional implementation, the cell determining method may further include: The terminal device obtains TA information; and determines, based on the TA information, a TA that can support the first network slice, as a first TA. Optionally, the TA information may be stored by the terminal device, or may be received by the terminal device from the access network device. For related descriptions of the TA information, refer to the related descriptions in the cell determining method 100. Details are not described herein again.

In an optional implementation, the one or more cells in step S203 work at a first frequency band, and the first frequency band is preset or configured by the access network device. For related descriptions of the first frequency band, refer to the related descriptions in the cell determining method 100. Details are not described herein again.

In an optional implementation, when there are at least two cells with highest relative priorities of the first slice group in the plurality of cells in step S203, the first cell is a cell with optimal radio signal quality in the at least two cells. It can be learned that when there are the at least two cells with the highest relative priorities of the first slice group in the one or more cells, the terminal device can select the cell with the optimal radio signal quality from the at least two cells to access the first network slice. For example, the one or more cells include a cell 1, a cell 2, and a cell 3. A relative priority of the first slice group in the cell 1 is 1, a relative priority of the first slice group in the cell 2 is 2, and a relative priority of the first slice group in the cell 3 is 1. In this case, cells that are determined by the terminal device from the cell 1, the cell 2, and the cell 3 and that have the highest relative priorities of the first slice group include the cell 1 and the cell 3. Then, the terminal device may determine, from the cell 1 and the cell 3, a cell with optimal radio signal quality as the first cell.

S204: The terminal device accesses the first network slice in the first cell. For information that the terminal device accesses the first network slice in the first cell, refer to the related descriptions in the cell determining method 100. Details are not described herein again.

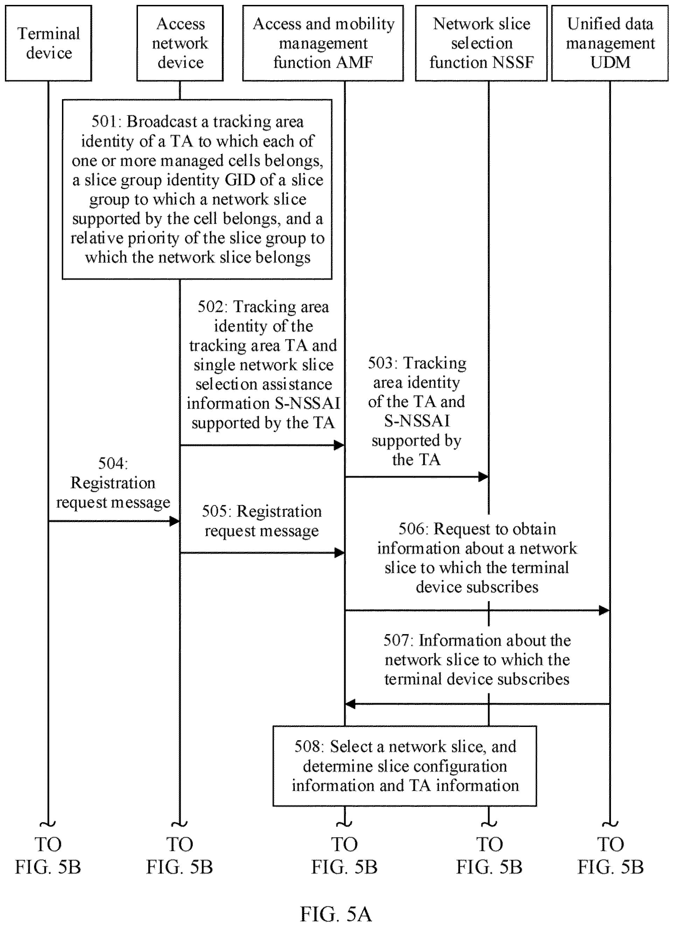

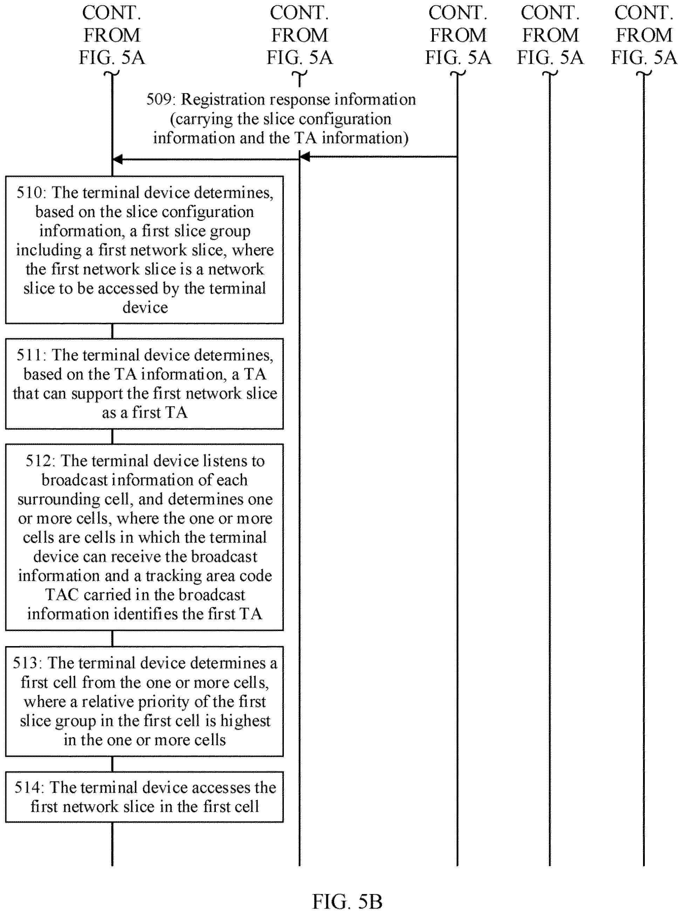

FIG. 5A and FIG. 5B are a schematic diagram of an example of a cell determining method according to an embodiment of this application. The example of the cell determining method includes the following steps.

501: An access network device broadcasts a tracking area identity of a TA to which each of a plurality of managed cells belongs, a GID of a slice group to which a network slice supported by the cell belongs, and a relative priority of the slice group to which the network slice belongs.

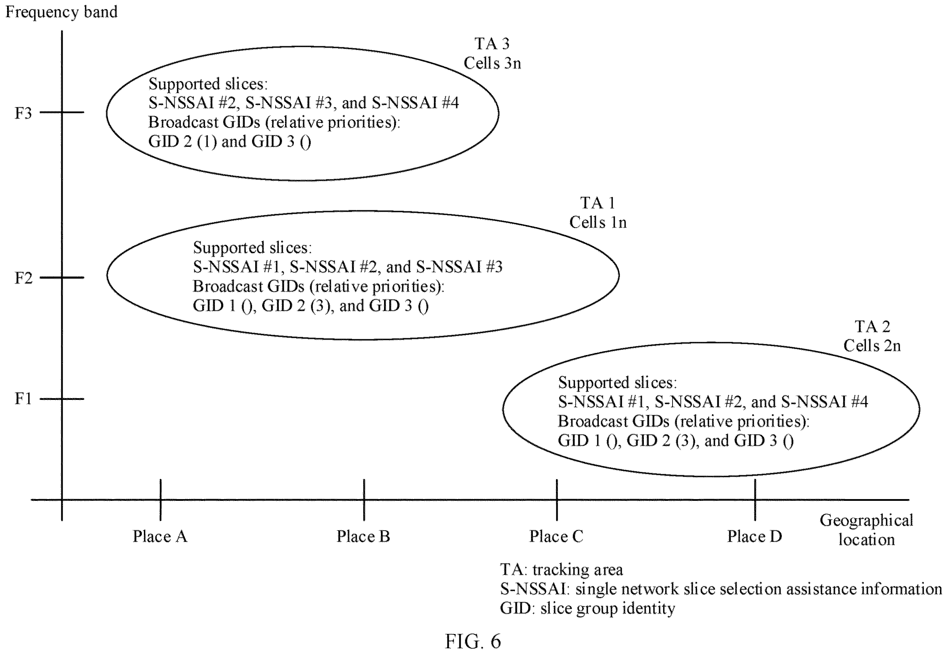

Deployment of network slices shown in FIG. 6 is used as an example. Network slice group information in FIG. 6 is shown in Table 5. In FIG. 6, a TA 3 covers a place A and a place B, and cells 3n (indicating a group of cells forming the TA 3) in the TA 3 work at a frequency band 3 (namely, F3), and support a network slice 2, a network slice 3, and a network slice 4. A TA 1 covers the place A, the place B, and a place C, and cells 1n (indicating a group of cells forming the TA 1) in the TA 1 work at a frequency band 2 (namely, F2), and support a network slice 1, the network slice 2, and the network slice 3. A TA 2 covers the place C and a place D, and cells 2n (indicating a group of cells forming the TA 2) in the TA 2 work at a frequency band 1 (namely, F1), and support the network slice 1, the network slice 2, and the network slice 4. In addition, a tracking area identity of the TA 1 is a TAC 1, a tracking area identity of the TA 2 is a TAC 2, and a tracking area identity of the TA 3 is a TAC 3. A GID of a slice group 1 is a GID 1, a GID of a slice group 2 is a GID 2, and a GID of a slice group 3 is a GID 3. In Table 5, each network slice belongs to a unique slice group in different TAs, and each network slice belongs to a same slice group in different TAs. However, one slice group may include one or more network slices. For example, the slice group 3 includes the network slice 3 and the network slice 4.

**Table 5**

| Network slice | S-NSSAI of the network slice | GID of the slice group to which the network slice belongs |
|---|---|---|
| Network slice 1 | S-NSSAI #1 | GID 1 |
| Network slice 2 | S-NSSAI #2 | GID 2 |
| Network slice 3 | S-NSSAI #3 | GID 3 |
| Network slice 4 | S-NSSAI #4 | GID 3 |

Therefore, GIDs broadcast by the cells 3n include the GID 2 and the GID 3, and a broadcast relative priority includes that a relative priority of the GID 2 is 1; GIDs broadcast by the cells 1n include the GID 1, the GID 2, and the GID 3, and a broadcast relative priority includes that a relative priority of the GID 2 is 3; and GIDs broadcast by the cells 2n include the GID 1, the GID 2, and the GID 3, and a broadcast relative priority include that a relative priority of the GID 2 is 3.

502: In an NG setup procedure, the access network device reports, to a connected AMF, a tracking area identity of a tracking area TA to which a managed cell belongs and S-NSSAI of a network slice supported by a cell in the TA.

503: The AMF sends, to an NSSF, the obtained tracking area identity of the TA to which the cell managed by the access network device belongs and the obtained S-NSSAI of the network slice supported by the cell in the TA. In addition, when the TA to which the cell managed by the access network device belongs, or the network slice supported by the cell in the TA changes, the AMF may send updated information to the NSSA. For example, the NSSF may subscribe, in advance from the AMF, to a tracking area identity of a TA managed by the AMF and S-NSSAI of a network slice supported by a cell in the TA. In addition, the NSSF may further obtain a geographical coverage area of each TA based on pre-configured network deployment information.

If a terminal device enters a current service network for the first time, or is just powered on, or just re-enters a service area from a no-service area without wireless network coverage, step 504 to step 509 are performed to successfully register with a network, so as to obtain slice configuration information and TA information. When storing the slice configuration information and the TA information, the terminal device may directly perform step 510.

504: The terminal device selects, based on a signal level of a cell, a cell with optimal radio signal quality to establish an RRC connection, and sends a registration request message to the access network device that manages the cell. The registration request message carries an SUPI of the terminal device. In addition, if the terminal device does not store the slice configuration information, the registration request information does not carry any network slice that the terminal device requests to access. If the terminal device stores the slice configuration information but does not have robust network deployment information (including the TA information), the registration request information further carries a network slice (namely, request NSSAI) that the terminal device requests to access.

505: The access network device forwards the registration request message to the connected AMF.

506: The AMF requests, based on the SUPI of the terminal device in the registration request message, a UDM to obtain information about a network slice that the terminal device subscribes to. The information about the network slice indicates one or more network slices configured for the terminal device and a default slice in the one or more network slices configured for the terminal device.

Deployment of network slices shown in FIG. 6 is used as an example. Information about a network slice may be shown in Table 6. It can be learned from Table 6 that network slices configured for the terminal device include a network slice 2, a network slice 3, and a network slice 4. The network slice 2 is a default slice.

**Table 6**

| Network slice configured for the terminal device | Default identifier |
|---|---|
| S-NSSAI #2 | Yes (yes) |
| S-NSSAI #3 | - |
| S-NSSAI #4 | - |

507: The UDM obtains, based on the SUPI of the terminal device, the information about the network slice that the terminal device subscribes to, and sends the information to the AMF.

508: When the registration request information carries the network slice that the terminal device requests to access, or when the registration request information does not carry the network slice that the terminal device requests to access, the AMF requests, based on the default slice in the one or more network slices configured for the terminal device, the NSSF to perform network slice selection. In addition, the NSSF obtains a current location of the terminal device from the AMF, and determines the TA information based on the current location. The AMF or the NSSF may further determine the slice configuration information based on pre-configured data. The pre-configured data indicates a slice group to which a pre-configured network slice belongs.

Deployment of network slices shown in FIG. 6 and network slice group information shown in Table 6 are used as an example. Slice configuration information may be shown in Table 7, and TA information of a terminal device located at a place A may be shown in Table 8 or Table 9. A TA 1 and a TA 3 are TAs that cover the current location of the terminal device, and the TA 2 is a neighboring TA.

**Table 7**

| Network slice configured for the terminal device | GID of the slice group to which the network slice belongs |
|---|---|
| S-NSSAI #2 | GID 2 |
| S-NSSAI #3 | GID 3 |
| S-NSSAI #4 | GID 3 |

**Table 8**

| TAC | Supported network slices configured for the terminal device |
|---|---|
| TAC 1 | S-NSSAI #2 and S-NSSAI #3 |
| TAC 2 | S-NSSAI #2 and S-NSSAI #4 |
| TAC 3 | S-NSSAI #2, S-NSSAI #3, and S-NSSAI #4 |

**Table 9**

| Network slice configured for the terminal device | Supported network slice |
|---|---|
| S-NSSAI #2 | TAC 1, TAC 2, and TAC 3 |
| S-NSSAI #3 | TAC 1 and TAC 3 |
| S-NSSAI #4 | TAC 2 and TAC 3 |

509: The AMF sends a registration response message to the terminal device by using the access network device, where the registration response message carries the slice configuration information and the TA information.

510: The terminal device determines, based on the slice configuration information, a first slice group including a first network slice, where the first network slice is a network slice to be accessed by the terminal device.

The slice configuration information shown in Table 7 is used as an example. The terminal device may determine, from Table 7, that when the first network slice is the network slice 2, the slice group 2 is used as the first slice group; when the first network slice is the network slice 3, the slice group 3 is used as the first slice group; or when the first network slice is the network slice 4, the slice group 3 is used as the first slice group.

511: The terminal device determines, based on the TA information, a TA that can support the first network slice, as a first TA.

The TA information shown in Table 8 or Table 9 is used as an example. The terminal device may determine, from Table 8 or Table 9, that when the first network slice is the network slice 2, the TA 1, the TA 2, and the TA 3 are all used as the first TA; when the first network slice is the network slice 3, the TA 1 and the TA 3 are both used as the first TA; or when the first network slice is the network slice 3, the TA 2 and the TA 3 are both used as the first TA.

512: The terminal device listens to broadcast information of each surrounding cell, and determines one or more cells, where the one or more cells are cells in which the terminal device can receive the broadcast information and a TAC carried in the broadcast information identifies the first TA.

513: The terminal device determines a first cell from the determined one or more cells, where a relative priority of the first slice group in the first cell is highest in the one or more cells.

514: The terminal device accesses the first network slice in the first cell.

For example, the terminal device is located at the place A in FIG. 6, and the first network slice is the network slice 2. The terminal device may receive broadcast information of the cells 3n and the cells 1n, and the broadcast information of the cells 3n and the cells 1n carry the first TA. In this case, the terminal device may determine that both the cells 3n and the cells 1n are cells that support the network slice 2. Signal levels of the cells 3n and the cells 1n meet an access requirement. The broadcast information corresponding to the cells 3n received by the terminal device further carries the relative priority of the first slice group with the GID 2 as 1, and the received broadcast information corresponding to the cells 1n further carries the relative priority of the first slice group with the GID 2 as 3. It can be learned that the relative priority of the GID 2 in the cells 3n is higher than the relative priority of the GID 2 in the cells 1n. In this case, the terminal device located at the place A determines that the first cell is the cells 3n, and accesses the network slice 1 in the cells 3n.

For another example, the first network slice determined by the terminal device at the place C in FIG. 6 is the network slice 1, and the terminal device may determine that both the cells 1n and the cells 2n are used as the first cells. In this case, the terminal device may select, based on signal levels of the cells 1n and the cells 2n, cells with optimal radio signal quality from the cells 1n and the cells 2n, to access the network slice 1.

In conclusion, in the cell determining method 200, the access network device broadcasts the relative priorities of slice groups in the one or more cells, where a broadcast relative priority of a slice group in each cell is a relative priority of a slice group to which a network slice supported by the cell belongs. The terminal device determines the first slice group including the first network slice, where the first network slice is the network slice to be accessed by the terminal device. The terminal device determines the first cell from the one or more cells, where the relative priority of the first slice group in the first cell is highest in the one or more cells, and the one or more cells are cells that can receive the broadcast information and support the first network slice. The terminal device accesses the first network slice in the first cell. It can be learned that the access network device broadcasts the relative priority of the slice group to which the network slice supported by each cell belongs, so that the terminal device learns of, from the cell that supports the first network slice, the relative priority of the slice group to which the first network slice belongs, and then the terminal device can determine the cell for accessing the first network slice. According to the method, a network can control the terminal device to preferably select a specific cell to access a network slice.

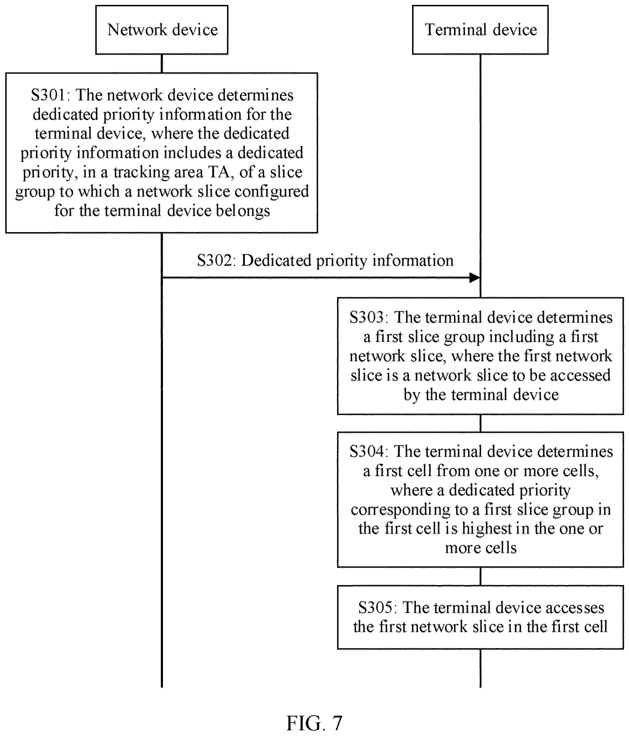

FIG. 7 is a schematic flowchart of a cell determining method 300 according to an embodiment of this application. The cell determining method 300 is described from a perspective of interaction between a network device and a terminal device. The network device may be an access network device or a core network device. The cell determining method 300 includes the following steps.

S301: The network device determines dedicated priority information for the terminal device, where the dedicated priority information includes a dedicated priority, in a tracking area TA, of a slice group to which a network slice configured for the terminal device belongs.

In an optional implementation, the dedicated priority information includes dedicated priorities of slice groups to which network slices configured for the terminal device belong in one or more TAs at or near a location of the terminal device. For a network slice configured for the terminal device, in the one or more TAs, dedicated priorities of slice groups to which the network slice belongs may be different. The network device can configure, in the dedicated priority information configured for the terminal device, a highest dedicated priority corresponding to the slice group to which the network slice belongs in a specific TA, so that a network controls the terminal device to preferably select a cell in the specific TA to access the network slice.

In an optional implementation, slice groups to which the network slices configured for the terminal device belong in the one or more TAs correspond to deployment frequency bands, and the dedicated priority information includes a dedicated priority corresponding to a slice group to which the network slice belongs in each TA in a corresponding deployment frequency band. For a network slice configured for the terminal device, in the one or more TAs, dedicated priorities of slice groups to which the network slice belongs may be the same or may be different in the corresponding deployment frequency band. The network device can configure, in the dedicated priority information configured for the terminal device, a dedicated priority corresponding to the slice group corresponding to a specific deployment frequency band to be highest, so that the network controls the terminal device to preferably select a cell working in the specific deployment frequency band to access the network slice.

There may be one or more deployment frequency bands corresponding to the slice group to which the network slice configured for the terminal device belongs in one TA. For example, a network slice 1 configured for the terminal device corresponds to a deployment frequency band 1 (namely, F1) and a deployment frequency band 2 (namely, F2) in a TA 1, and corresponds to a deployment frequency band 3 (namely, F3) in a TA 2. A dedicated priority corresponding to a slice group to which the network slice 1 belongs at F1 in the TA 1 is 2, a dedicated priority corresponding to a slice group at F2 is 1, and a dedicated priority corresponding to a slice group to which the network slice 1 belongs at F3 in the TA 2 is 3. In this case, the dedicated priority information may include that the dedicated priority corresponding to the slice group to which the network slice 1 belongs at F1 in the TA 1 is 2, the dedicated priority corresponding to the slice group at F2 is 1, and the dedicated priority corresponding to the slice group to which the network slice 1 belongs at F3 in the TA 2 is 3.

In an optional implementation, a dedicated priority may be represented in a form of a positive number value, and a positive number value is used to represent a dedicated priority. For example, a smaller positive number value indicates a higher dedicated priority. A dedicated priority corresponding to a slice group 1 to which a network slice 1 in a cell 1 belongs is 1, and a dedicated priority corresponding to a slice group 2 to which a network slice 1 in a cell 2 belongs is 2. This indicates that the dedicated priority corresponding to the slice group 1 to which the network slice 1 in the cell 1 belongs is higher than the dedicated priority corresponding to the slice group 2 to which the network slice 1 in the cell 2 belongs. In addition, a representation form of the dedicated priority is not limited in this application. For ease of description, in examples of the dedicated priority in embodiments of this application, a smaller positive number indicates a higher dedicated priority.

In an optional implementation, when slice groups in different TAs use different GIDs, the dedicated priority information determined by the network device in step S201 may further include a dedicated priority corresponding to a slice group to which a network slice configured for the terminal device belongs.

For example, the network slices configured for the terminal device are a network slice 1 and a network slice 2. In a TA 1, a dedicated priority corresponding to a slice group 1 (corresponding to a GID 1) to which the network slice 1 belongs is 1, and a dedicated priority corresponding to a slice group 2 (corresponding to a GID 2) to which the network slice 2 belongs is not set. A dedicated priority corresponding to a slice group 3 (corresponding to a GID 3) to which the network slice 1 belongs in a TA 2 is 2. It can be learned that the GID used by the slice group in the TA 1 is different from the GID used by the slice group in the TA 2. Therefore, the dedicated priority information may include that the dedicated priority corresponding to the GID 1 is 1, and the dedicated priority corresponding to the GID 3 is 2; or the dedicated priority information may include that the dedicated priority corresponding to the GID 1 in the TA 1 is 1, and the dedicated priority corresponding to the GID 3 in the TA 2 is 2.

In an optional implementation, the dedicated priority information may be represented in a form of a list. A representation form of the dedicated priority information is not limited in this application.

In an optional implementation, the dedicated priority information is carried in a registration response message, or the dedicated priority information is carried in a configuration update message.

In an optional implementation, the network device configures different dedicated priority information for different terminal devices. Dedicated priority information configured by the network device for a terminal device is applicable only to the terminal device; or the network device configures dedicated priority information for some terminal devices, and does not configure dedicated priority information for another terminal device.

In an optional implementation, the cell determining method 300 may further include: An access network device reports to a connected AMF in an NG setup procedure, a tracking area identity of a TA to which a managed cell belongs and S-NSSAI of a network slice supported by a cell in the TA.

Optionally, when receiving the tracking area identity of the TA to which the cell managed by the access network device belongs and the S-NSSAI of the network slice supported by the cell in the TA, or when the network slice supported by the cell in the TA changes, the AMF sends, to an NSSF, the tracking area identity of the TA to which the cell managed by the access network device belongs and the S-NSSAI of the network slice supported by the cell in the TA. The NSSF subscribes, in advance from the AMF, to a tracking area identity of a TA managed by the AMF and a network slice supported by a cell in the TA. Optionally, the AMF may exchange and record, with another AMF, the tracking area identity of the TA to which the cell managed by the access network device belongs and the S-NSSAI of the network slice supported by the cell in the TA. The AMF may exchange the foregoing information with the another AMF by using the NSSF. In addition, after deployment of the network slice changes, the AMF may update recorded information by using the foregoing operation again.

Optionally, the access network device may further report information about a slice group in a TA to the connected AMF. The information about the slice group in the TA includes the S-NSSAI of the network slice supported by the cell in the TA and a GID of a slice group to which the network slice belongs. Correspondingly, the AMF may further exchange with another AMF, the information about the slice group in the TA.

S302: The network device sends the dedicated priority information to the terminal device. Correspondingly, the terminal device receives the dedicated priority information. The dedicated priority information is used by the terminal device to perform cell selection or cell reselection.

S303: The terminal device determines a first slice group including a first network slice, where the first network slice is a network slice to be accessed by the terminal device.

In an optional implementation, the method may further include: The terminal device determines a to-be-accessed network slice as the first network slice; when there are a plurality of to-be-accessed network slices, the terminal device selects, as the first network slice from the plurality of to-be-accessed network slices, a network slice in which a PDU session is established; when there are a plurality of network slices in which a PDU session is established in to-be-accessed network slices, the terminal device selects, as the first network slice from the plurality of network slices, a network slice in which the PDU session is in an active state; or when there are a plurality of to-be-accessed network slices, the terminal device selects a network slice with a highest priority from the network slices as the first network slice. For related descriptions of the first network slice, refer to the related descriptions in the cell determining method 100. Details are not described herein again.

In an optional implementation, that the terminal device determines the first slice group including the first network slice may include: The terminal device obtains slice configuration information; and the terminal device selects, based on the slice configuration information, a slice group including the first network slice as the first slice group. Optionally, the slice configuration information may be stored by the terminal device, or may be received by the terminal device from the network device. For related descriptions of the slice configuration information, refer to the related descriptions in the cell determining method 100. Details are not described herein again.

S304: The terminal device determines a first cell from one or more cells, where a dedicated priority corresponding to a first slice group in the first cell is highest in the one or more cells.

For example, the one or more cells include a cell 1, a cell 2, and a cell 3. A dedicated priority corresponding to a first slice group in the cell 1 is 2, a dedicated priority corresponding to a first slice group in the cell 2 is 1, and a dedicated priority corresponding to a first slice group in the cell 3 is 3. In this case, the terminal device determines, from the cell 1, the cell 2, and the cell 3, that the cell 2 is the first cell.

The one or more cells are cells in which the terminal device can receive broadcast information and a tracking area code TAC carried in the broadcast information identifies a first tracking area, and the first tracking area is a TA that can support the first network slice, or the one or more cells are cells in which the terminal device can receive broadcast information and the broadcast information carries the first slice group. For related descriptions of the one or more cells, refer to the related descriptions in the cell determining method 100. Details are not described herein again.

In an optional implementation, the cell determining method 300 may further include: The terminal device obtains TA information; and determines, based on the TA information, a TA that can support the first network slice, as a first TA. Optionally, the TA information may be stored by the terminal device, or may be received by the terminal device from the network device. For related descriptions of the TA information, refer to the related descriptions in the cell determining method 100. Details are not described herein again.

In an optional implementation, the one or more cells work at a first frequency band, and the first frequency band is preset or is configured by the network device. For related descriptions of the first frequency band, refer to the related descriptions in the cell determining method 100. Details are not described herein again.

In an optional implementation, when there are at least two cells with highest dedicated priorities corresponding to the first slice group in a plurality of cells, the first cell is a cell with optimal radio signal quality in the at least two cells. For example, the one or more cells include a cell 1, a cell 2, and a cell 3. A dedicated priority corresponding to a first slice group in the cell 1 is 1, a dedicated priority corresponding to a first slice group in the cell 2 is 2, and a dedicated priority corresponding to a first slice group in the cell 3 is 1. In this case, cells that are determined by the terminal device from the cell 1, the cell 2, and the cell 3 and that have the highest dedicated priorities corresponding to the first slice group include the cell 1 and the cell 3. Then, the terminal device may determine, from the cell 1 and the cell 3, a cell with optimal radio signal quality as the first cell.

In another optional implementation, when there are at least two cells with highest dedicated priorities corresponding to the first slice group in a plurality of cells, the first cell is a cell with a highest relative priority of the first slice group in the at least two cells. The relative priority of the first slice group in each cell is broadcast by the access network device. For example, the one or more cells include a cell 1, a cell 2, and a cell 3. In the cell 1, a dedicated priority corresponding to a first slice group is 1, and a relative priority of the first slice group is 2. In the cell 2, a dedicated priority corresponding to a first slice group is 2, and a relative priority of the first slice group is 1. In the cell 3, a dedicated priority corresponding to a first slice group is 1, and a relative priority corresponding to the first slice group is 1. In this case, cells that are determined by the terminal device from the cell 1, the cell 2, and the cell 3 and that have highest dedicated priorities corresponding to the first slice group include the cell 1 and the cell 3. Then, the terminal device may determine, from the cell 1 and the cell 3, the cell 3 with a highest relative priority in the first slice group as the first cell.

S305: The terminal device accesses the first network slice in the first cell. For related descriptions that the terminal device accesses the first network slice in the first cell, refer to the related descriptions in the cell determining method 100. Details are not described herein again.

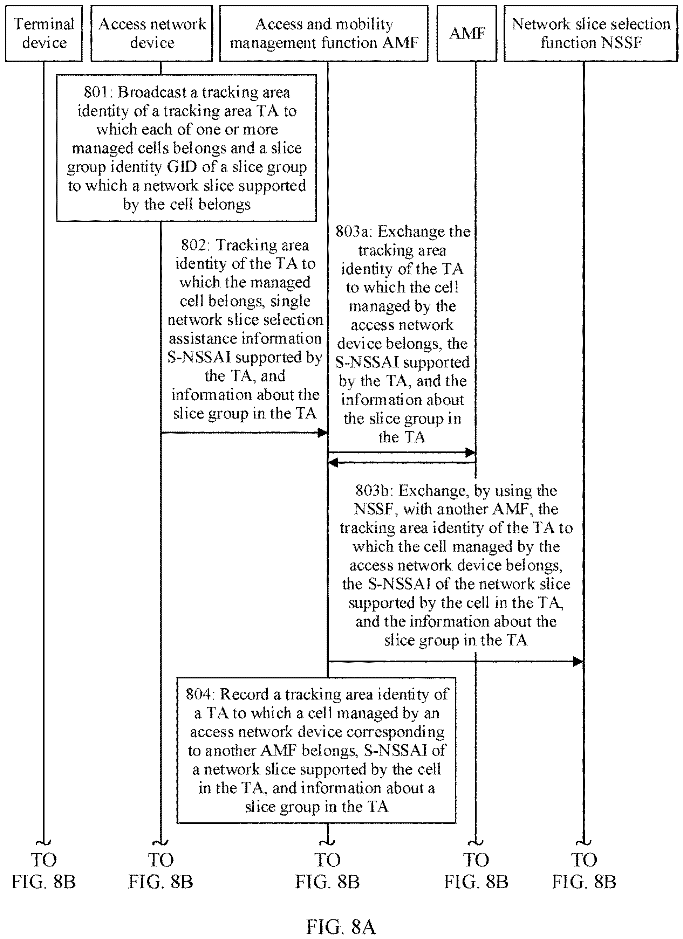

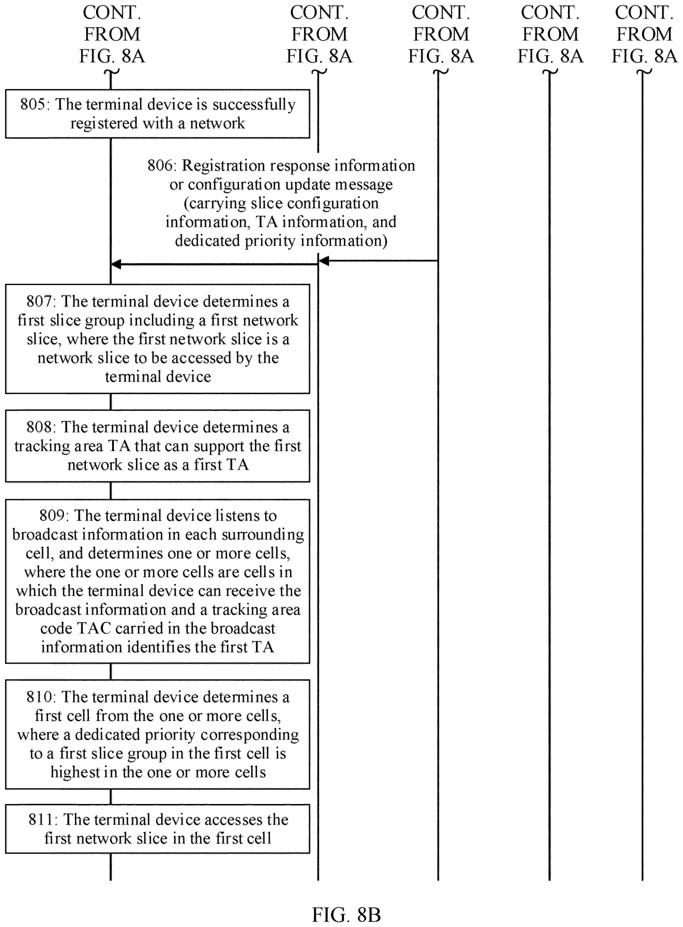

FIG. 8A and FIG. 8B are a schematic flowchart of another example of a cell determining method according to an embodiment of this application. The example of the cell determining method includes the following steps.

801: An access network device broadcasts a tracking area identity of a tracking area TA to which each of a plurality of managed cells belongs and a slice group identity GID of a slice group to which a network slice supported by the cell belongs.

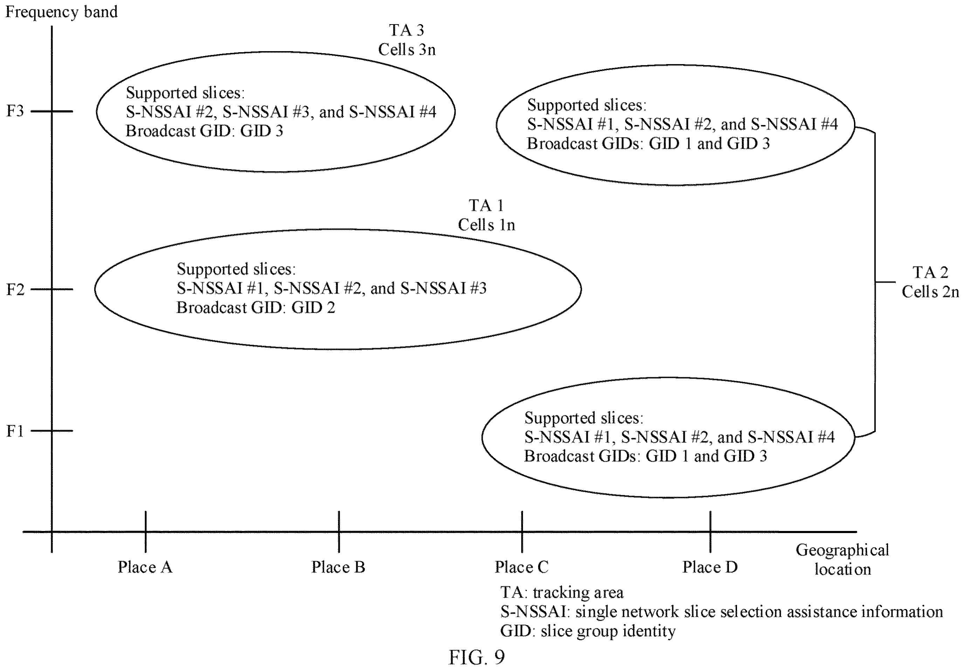

Deployment of network slices shown in FIG. 9 is used as an example. Network slice group information in FIG. 9 is shown in Table 10. In FIG. 9, a TA 3 covers a place A and a place B. Cells 3n (indicating a group of cells forming the TA 3) in the TA 3 work at a frequency band 3 (namely, F3), and support a network slice 2, a network slice 3, and a network slice 4. A TA 1 covers the place A, the place B, and a place C, and cells 1n (indicating a group of cells forming the TA 1) in the TA 1 work at a frequency band 2 (namely, F2), and support a network slice 1, the network slice 2, and the network slice 3. A TA 2 covers the place C and a place D. Cells 2n (indicating a group of cells forming the TA 2) in the TA 2 support a network slice 1, a network slice 2, and a network slice 4. Some cells in the cells 2n work at a frequency band 3, namely (F3), and some cells work at a frequency band 1 (namely, F1). In addition, a tracking area identity of the TA 1 is a TAC 1, a tracking area identity of the TA 2 is a TAC 2, and a tracking area identity of the TA 3 is a TAC 3. A GID of a slice group 1 is a GID 1, a GID of a slice group 2 is a GID 2, and a GID of a slice group 3 is a GID 3.

**Table 10**

| Network slice | S-NSSAI of the network slice | GID of a slice group to which the network slice in a TA 1 belongs | GID of a slice group to which the network slice in a TA 2 belongs | GID of a slice group to which the network slice in a TA 3 belongs |
|---|---|---|---|---|
| Network slice 1 | S-NSSAI #1 | GID 2 | GID 1 | Not supported |
| Network slice 2 | S-NSSAI #2 | GID 2 | GID 3 | GID 3 |
| Network slice 3 | S-NSSAI #3 | GID 2 | Not supported | GID 3 |
| Network slice 4 | S-NSSAI #4 | Not supported | GID 3 | GID 3 |

In this case, a GID broadcast by the cells 3n includes the GID 3; a GID broadcast by the cells 1n includes the GID 2; and GIDs broadcast by the cells 2n include the GID 1 and the GID 3.

802: In an NG setup procedure, the access network device reports, to a connected AMF, a tracking area identity of a TA to which a managed cell belongs, S-NSSAI of a network slice supported by a cell in the TA, and information about a slice group in the TA.

803a: The AMF directly exchanges, with another AMF, the tracking area identity of the TA to which the cell managed by the access network device belongs, the S-NSSAI of the network slice supported by the cell in the TA, and the information about the slice group in the TA. Alternatively, 803b: The AMF may exchange, with another AMF by using an NSSF, the tracking area identity of the TA to which the cell managed by the access network device belongs, the S-NSSAI of the network slice supported by the cell in the TA, and the information about the slice group in the TA.

804: The AMF records a tracking area identity of a TA to which a cell managed by an access network device corresponding to another AMF belongs, S-NSSAI of a network slice supported by the cell in the TA, and information about a slice group in the TA.

805: A terminal device is successfully registered with a network.

806: The AMF sends a registration response message or a configuration update message to the terminal device by using the access network device, where the registration response message or the configuration update message carries slice configuration information, TA information, and dedicated priority information.

Deployment of network slices shown in FIG. 9 is used as an example. The slice configuration information, the TA information, and the dedicated priority information may be integrated into a list, as shown in Table 11. Table 11 shows network slices configured for the terminal device, default slices, slice groups to which the network slices configured for the terminal device in the TA belong, and dedicated priorities of the slice groups to which the network slices configured for the terminal device in the TA belong.

**Table 11**

| Network slice configured for the terminal device | Default identifier | The slice group to which the network slice in a TA 1 belongs (dedicated priority) | The slice group to which the network slice in a TA 2 belongs (dedicated priority) | The slice group to which the network slice in a TA 3 belongs (dedicated priority) |
|---|---|---|---|---|
| S-NSSAI #1 | yes | GID 2 (1) | GID 1 (3) | Not supported |
| S-NSSAI #3 | - | GID 2 () | Not supported | GID 3 () |
| S-NSSAI #4 | - | Not supported | GID 3 () | GID 3 () |

807: The terminal device determines a first slice group including a first network slice, where the first network slice is a network slice to be accessed by the terminal device.

Table 11 is used as an example. The terminal device may determine, from Table 11, that when the first network slice is the network slice 1, both the slice group 2 in the TA 1 and the slice group 1 in the TA 2 may be used as the first slice groups; when the first network slice is the network slice 3, both the slice group 2 in the TA 1 and the slice group 3 in the TA 3 may be used as the first slice groups; or when the first network slice is the network slice 4, both the slice group 3 in the TA 2 and the slice group 3 in the TA 3 may be used as the first slice groups.

808: The terminal device determines a tracking area TA that can support the first network slice as a first TA.

Table 11 is used as an example. The terminal device may determine, from Table 11, that when the first network slice is the network slice 1, the TA 1 and the TA 2 serve as the first TA; when the first network slice is the network slice 3, both the TA 1 and the TA 3 serve as the first TA; or when the first network slice is the network slice 4, both the TA 2 and the TA 3 serve as the first TA.

809: The terminal device listens to broadcast information in each surrounding cell, and determines one or more cells, where the one or more cells are cells in which the terminal device can receive broadcast information and a TAC carried in the broadcast information identifies the first TA.

810: The terminal device determines a first cell from the one or more cells, where a dedicated priority corresponding to a first slice group in the first cell is highest in the one or more cells.

Optionally, when there are at least two cells with highest dedicated priorities in a plurality of cells, if broadcast information in the at least two cells each further carries a relative priority of the first slice group in the cell, the terminal device may select, as the first cell, from the at least two cells, a cell carrying the broadcast information with the highest relative priority of the first slice group. For example, the terminal device is located at the place D in FIG. 9, and the first network slice is the network slice 1. It can be seen that dedicated priorities of the cells 2n are highest in the one or more cells. If broadcast information in a cell in the cells 2n that works at F3 carries a relative priority 3 of the GID 1, and broadcast information in a cell in the cells 2n that works at F 1 carries a relative priority 1 of the GID 1, the terminal device may select the cell in the cells 2n that works at F1 as the first cell.

Optionally, when it is preset or the network device specifies that a working frequency band of the cell selected by the terminal device is a first frequency band, the first cell is a cell in the one or more cells that has the highest dedicated priority corresponding to the first slice group and that works at the first frequency band. For example, the terminal device is located at the place D in FIG. 9, and the first network slice is the network slice 1. It can be seen that dedicated priorities of the cells 2n are highest in the one or more cells. When the network device specifies that the cell selected by the terminal device works at F3, the terminal device selects, as the first cell, a cell that works at F3 in the cells 2n.

811: The terminal device accesses the first network slice in the first cell.

For example, the terminal device is located at the place C in FIG. 9, and the first network slice is the network slice 1. The terminal device may receive broadcast information in the cells 2n and the cells 1n, and both the broadcast information from the cells 2n and the broadcast information from the cells 1n carry the first TA. In this case, the terminal device may determine that both the cells 2n and the cells 1n are cells that support the network slice 1. Signal levels of the cells 2n and the cells 1n meet an access requirement. The broadcast information, from the cells 2n, received by the terminal device further carries the GID 1 of the first slice group, and the broadcast information received from the cells 1n further carries the GID 2 of the first slice group. The terminal device may determine, based on Table 11, that the dedicated priority corresponding to the GID 2 in the cells 1n is higher than the dedicated priority corresponding to the GID 1 in the cells 2n. In this case, the terminal device located at the place C determines that the first cell is the cells 1n, and accesses the network slice 1 in the cells 1n.

In conclusion, in the cell determining method 300, the network device determines dedicated priority information of the terminal device, where the dedicated priority information includes a dedicated priority, in the TA, of a slice group to which a network slice configured for the terminal device belongs. The network device sends the dedicated priority information to the terminal device. Correspondingly, the terminal device receives the dedicated priority information. The terminal device determines the first slice group including the first network slice, where the first network slice is the network slice to be accessed by the terminal device. The terminal device determines the first cell from the one or more cells, where the dedicated priority corresponding to the first slice group in the first cell is highest in the one or more cells. The terminal device accesses the first network slice in the first cell.

It can be learned that, the network device can configure the dedicated priority information for the terminal device, so that the terminal device learns, based on the dedicated priority information, in a cell that supports the first network slice, the dedicated priority corresponding to the slice group to which the first network slice belongs, and the terminal device can determine a cell for accessing the first network slice. In the method, the network can control a specific terminal device to preferably select a specific cell to access the network slice, and another terminal that is not configured with the dedicated priority information selects another cell to access the network slice based on the relative priority, of the slice group to which the network slice belongs, broadcast by the cell. The network controls the specific terminal to access the network slice by using the cell different from cells used by most terminals, and this provides a differentiated network service for the specific terminal.

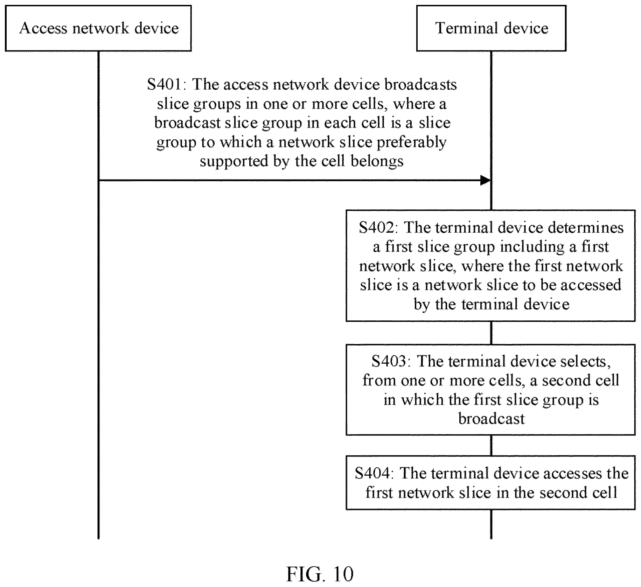

FIG. 10 is a schematic flowchart of a cell determining method 400 according to an embodiment of this application. The cell determining method 400 is described from a perspective of interaction between a terminal device and an access network device. The cell determining method 400 includes the following steps.

S401: The access network device broadcasts slice groups in one or more cells, where a broadcast slice group in each cell is a slice group to which a network slice preferably supported by the cell belongs. The slice groups in the one or more cells broadcast by the access network device are used by the terminal device to perform cell selection or cell reselection.

In an optional implementation, before the access network device broadcasts the slice groups in the one or more cells, the cell determining method 400 may further include: The access network device selects, for each of the one or more cells, a slice group to which a preferably supported network slice belongs from one or more slice groups in the cell, as a broadcast slice group.

In an optional implementation, for each of the one or more cells, the access network device skips broadcasting a slice group to which a network slice other than the preferably supported network slice in a network slice supported by the cell belongs.

In an optional implementation, the slice group broadcast by the access network device excludes a slice group to which a network slice other than the preferably supported network slice in the network slices supported by each of the one or more cells belongs.

For example, in a cell 1, a network slice 1 belongs to a slice group 1, and a network slice 2 belongs to a slice group 2. If a network slice preferably supported by the cell 1 is only the network slice 1, the terminal device broadcasts the slice group 1 in the cell 1, and skips broadcasting the slice group 2 in the cell. In other words, the slice group 2 is excluded from the slice group in the cell 1 broadcast by the access network device.

In an optional implementation, the network slice preferably supported by each of the one or more cells is determined based on frequency band priority information of the network slice, frequency band priority information of each network slice includes frequency band priorities of the network slice in one or more frequency bands, and a frequency band priority of the network slice preferably supported by each cell in a working frequency band of the cell is highest in the one or more frequency bands. Alternatively, frequency band priority information of each network slice is a frequency band list in which performance or experience of the network slice on each working frequency band is sorted in descending order. For each of the one or more cells, the access network device determines, based on whether a working frequency band of the cell is at a highest location in the frequency band list of the network slice, whether the cell preferably supports the network slice.

It can be learned that in this implementation, the network device can determine, based on the frequency band priority information of the network slice and a working frequency band of each cell, whether the cell preferably supports the network slice. When a cell preferably supports a network slice, it indicates that the cell can better meet a performance requirement of the network slice. Therefore, the terminal device can select, when determining a cell, a cell that can better meet the performance requirement of the to-be-accessed network slice, and obtain a better network service provided by the to-be-accessed network slice. For related descriptions of the frequency band priority information, refer to the related descriptions in the cell determining method 200. Details are not described herein again.

For example, frequency band priority information of a network slice 1 includes the following: A frequency band priority of the network slice 1 at a frequency band 1 (namely, F1) is 3, a frequency band priority at a frequency band 2 (namely, F2) is 1, and a frequency band priority at a frequency band 3 (namely, F3) is 2. A cell 1 working at F1, a cell 2 working at F2, and a cell 3 working at F3 all support the network slice 1. It can be learned that the frequency band priority of the network slice 1 at the working frequency band (namely, F1) in the cell 1 is not highest among F1, F2, and F3, and the frequency band priority of the network slice 1 at the working frequency band (namely, F2) in the cell 2 is highest among F1, F2, and F3. If the frequency band priority of the working frequency band (namely, F3) in the cell 3 is not highest among F1, F2, and F3, the network slice 1 is a network slice preferably supported by the cell 2. The network slice 1 is not a network slice preferably supported by the cell 1 and the cell 3.

In another optional implementation, the network slice preferably supported by each of the one or more cells is manually configured. For example, a cell 1 supports a network slice 1 and a network slice 2, and an operator may configure, based on a requirement of the operator, the cell 1 to preferably support the network slice 1 and non-preferably support the network slice 2.

S402: The terminal device determines a first slice group including a first network slice, where the first network slice is a network slice to be accessed by the terminal device.

In an optional implementation, the method may further include: The terminal device determines a to-be-accessed network slice as the first network slice; when there are a plurality of to-be-accessed network slices, the terminal device selects, as the first network slice from the plurality of to-be-accessed network slices, a network slice in which a PDU session is established; when there are a plurality of network slices in which a PDU session is established in to-be-accessed network slices, the terminal device selects, as the first network slice from the plurality of network slices, a network slice in which the PDU session is in an active state; or when there are a plurality of to-be-accessed network slices, the terminal device selects a network slice with a highest priority from the network slices as the first network slice. For related descriptions of the first network slice, refer to the related descriptions in the cell determining method 100. Details are not described herein again.

In an optional implementation, that the terminal device determines the first slice group including the first network slice may include: The terminal device obtains slice configuration information; and the terminal device selects, based on the slice configuration information, a slice group including the first network slice as the first slice group. Optionally, the slice configuration information may be stored by the terminal device, or may be received by the terminal device from the access network device. For related descriptions of the slice configuration information, refer to the related descriptions in the cell determining method 100. Details are not described herein again.

S403: The terminal device selects, from one or more cells, a second cell in which the first slice group is broadcast. The one or more cells are cells in which the terminal device can receive broadcast information and a tracking area code TAC carried in the broadcast information identifies a first tracking area, and the first tracking area is a tracking area TA that can support the first network slice.

In an optional implementation, the cell determining method 400 may further include: The terminal device obtains TA information; and determines, based on the TA information, a TA that can support the first network slice, as a first TA. Optionally, the TA information may be stored by the terminal device, or may be received by the terminal device from the access network device. For related descriptions of the TA information, refer to the related descriptions in the cell determining method 100. Details are not described herein again.

In an optional implementation, the one or more cells work at a first frequency band, and the first frequency band is preset or is configured by the access network device. For related descriptions of the first frequency band, refer to the related descriptions in the cell determining method 100. Details are not described herein again.

In an optional implementation, when there are at least two cells, in a plurality of cells, that broadcast the first slice group, the second cell may be a cell, in the at least two cells, with a highest dedicated priority corresponding to the first slice group. It can be learned that, in this implementation, when determining that at least two cells that the slice group to which the to-be-accessed network slice belongs have broadcast, the terminal device can select a cell with a highest dedicated priority from the at least two cells with reference to dedicated priorities corresponding to the slice group to which the to-be-accessed network slice belongs in each of the at least two cells.

For example, the one or more cells include a cell 1, a cell 2, and a cell 3. The first slice group is broadcast in both the cell 1 and the cell 3, a dedicated priority corresponding to the first slice group in the cell 1 is 1, and a dedicated priority corresponding to the first slice group in the cell 3 is 2. In this case, the cells that are determined by the terminal device from the cell 1, the cell 2, and the cell 3 and that broadcast the first slice group include the cell 1 and the cell 3. Then, the terminal device may determine, from the cell 1 and the cell 3, a cell 1 with a highest dedicated priority corresponding to the first slice group as the second cell.

Optionally, the cell determining method 400 further includes: The access network device determines dedicated priority information for the terminal device, where the dedicated priority information includes a dedicated priority corresponding to a slice group to which a network slice configured for the terminal device belongs, or the dedicated priority information includes, in a TA, a dedicated priority corresponding to a slice group to which a network slice configured for the terminal device belongs. The access network device sends the dedicated priority information to the terminal device, where the dedicated priority information is used by the terminal device to perform cell selection or cell reselection. Optionally, the access network device configures different dedicated priority information for different terminal devices. For related descriptions of a dedicated priority and the dedicated priority information, refer to the related descriptions in the cell determining method 300. Details are not described herein again.

S404: The terminal device accesses the first network slice in the second cell. For related descriptions that the terminal device accesses the first network slice in the selected cell, refer to the related descriptions in the cell determining method 100. Details are not described herein again.

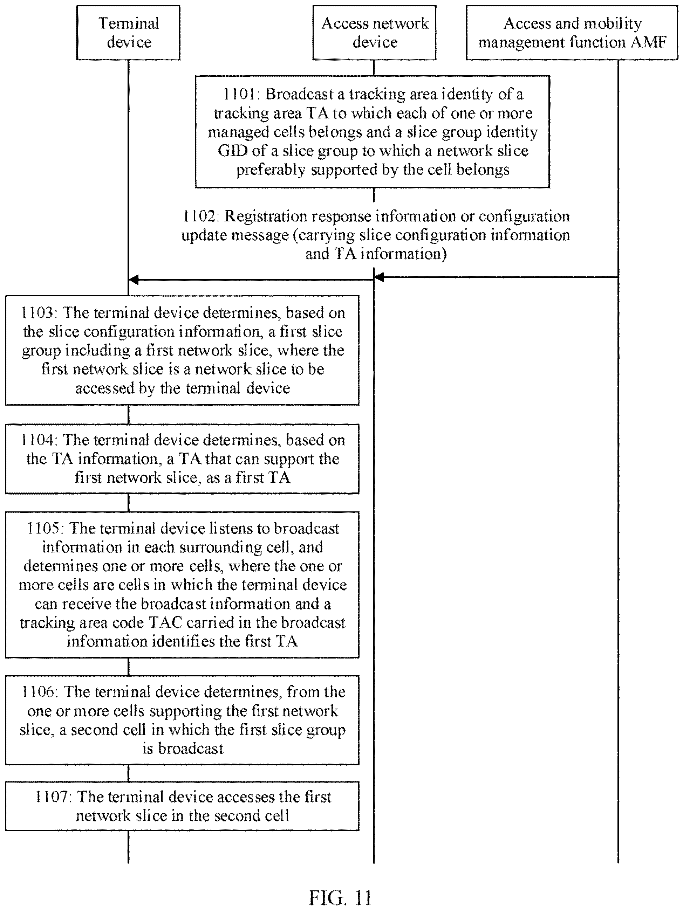

FIG. 11 is a schematic flowchart of another example of a cell determining method according to an embodiment of this application. The example of the cell determining method includes the following steps.

1101: An access network device broadcasts a tracking area identity of a tracking area TA to which each of one or more managed cells belongs and a slice group identity GID of a slice group to which a network slice preferably supported by the cell belongs.

In each cell, a slice group to which a preferably supported network slice belongs is different from a slice group to which a non-preferably supported network slice belongs. In addition, different network slices in a plurality of network slices preferably supported by each cell may belong to a same slice group or different slice groups.

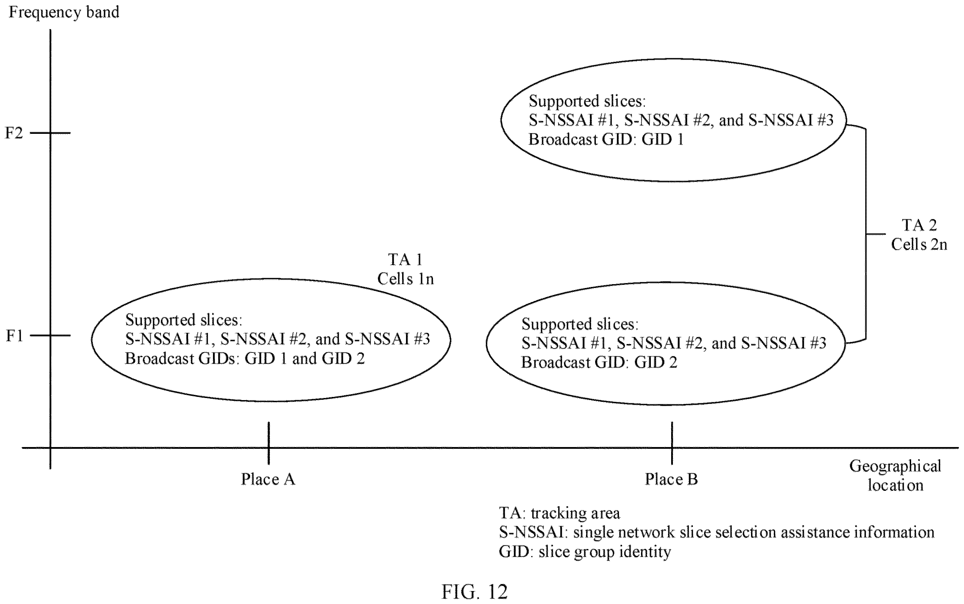

Deployment of network slices shown in FIG. 12 is used as an example. Network slice group information in FIG. 12 is shown in Table 12. In FIG. 12, a TA 1 covers a place A, and cells 1n (indicating a group of cells forming the TA 1) in the TA 1 work at a frequency band 1 (namely, F1), and supports a network slice 1, a network slice 2, and a network slice 3. A TA 2 covers a place B. Cells 2n (indicating a group of cells forming the TA 2) in the TA 2 support a network slice 1, a network slice 2, and a network slice 3. Some cells in the cells 2n work at the frequency band 1 (namely, F1), and other cells work at a frequency band 2 (namely, F2). In addition, a tracking area identity of the TA 1 is a TAC 1, and a tracking area identity of a TA 2 is a TAC 2. A GID of a slice group 1 is a GID 1, and a GID of a slice group 2 is a GID 2. In Table 12, each network slice belongs to a unique slice group in different TAs, and each network slice belongs to a same slice group in different TAs.

**Table 12**

| Network slice | S-NSSAI of the network slice | GID of the slice group to which the network slice belongs |
|---|---|---|
| Network slice 1 | S-NSSAI #1 | GID 1 |
| Network slice 2 | S-NSSAI #2 | GID 2 |
| Network slice 3 | S-NSSAI #3 | GID 2 |

Network slices preferably supported by the cells 1n include the network slice 1 and the network slice 2, network slices preferably supported by cells, in the cells 2n, working at F1 include the network slice 2 and the network slice 3, and a network slice preferably supported by a cell in the cells 2n that works at F2 is the network slice 1. In this case, GIDs broadcast by the cells 1n include the GID 1 and the GID 2, a GID broadcast by the cell working at F1 in the cells 2n includes the GID 1, and a GID broadcast by the cell working at F2 in the cells 2n includes the GID 2.

1102: An AMF sends a registration response message or a configuration update message to a terminal device by using the access network device, where the registration response message or the configuration update message carries slice configuration information and TA information.

1103: The terminal device determines, based on the slice configuration information, a first slice group including a first network slice, where the first network slice is a network slice to be accessed by the terminal device.

1104: The terminal device determines, based on the TA information, a TA that can support the first network slice, as a first TA.

1105: The terminal device listens to broadcast information in each surrounding cell, and determines one or more cells, where the one or more cells are cells in which the terminal device can receive broadcast information and a tracking area code TAC carried in the broadcast information identifies the first TA.

1106: The terminal device determines, from the one or more cells supporting the first network slice, a second cell in which a first slice group is broadcast.

1107: The terminal device accesses the first network slice in the second cell.

For example, the terminal device works at the place B in FIG. 12, and the first network slice is the network slice 1. The terminal device may receive broadcast information from the cells 2n, and the broadcast information from the cells 2n carries the first TA. The terminal device may determine that the cells 2n are cells that support the network slice 1. In addition, the broadcast information received by the terminal device from the cells 2n that work at F2 further carries the GID 1. In this case, the terminal device may determine that the second cell is the cell that works at F2 in the cells 2n, and access the network slice 1 in the cell.

In conclusion, in the cell determining method 400, the access network device broadcasts the slice groups in the one or more cells, where the broadcast slice group in each cell is the slice group to which the network slice preferably supported by the cell belongs. The terminal device determines the first slice group including the first network slice, where the first network slice is the network slice to be accessed by the terminal device. The terminal device selects, from the one or more cells, the second cell that broadcasts the first slice group, where the one or more cells are the cells in which the terminal device can receive the broadcast information and the tracking area code TAC carried in the broadcast information identifies the first tracking area, and the first tracking area is a tracking area TA that can support the first network slice. The terminal device accesses the first network slice in the second cell. It can be learned that, the access network device broadcasts only the slice group to which the network slice preferably supported by each cell belongs, instead of broadcasting slice groups to which all the network slices supported by each cell belong. This helps control a cell selected by the terminal device to be the cell that preferably supports a to-be-accessed network slice, and helps the terminal device select a cell that better meets a performance requirement or an experience requirement of the to-be-accessed network slice.

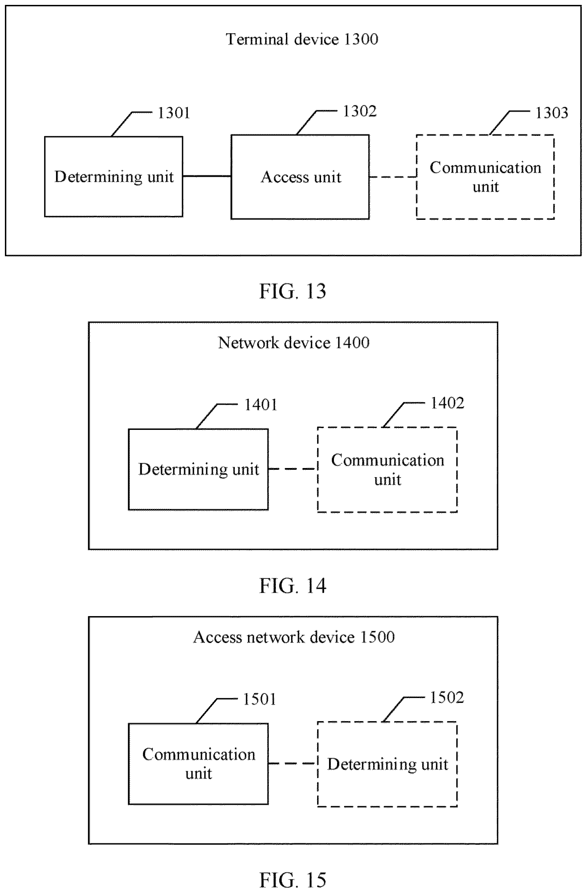

FIG. 13 is a schematic diagram of a structure of a terminal device according to an embodiment of this application. The terminal device 1300 may be configured to implement functions of the terminal device in the foregoing method embodiments, and therefore can also implement beneficial effect of the foregoing method embodiments. The terminal device 1300 includes a determining unit 1301 and an access unit 1302. The determining unit 1301 is configured to determine a first slice group including a first network slice, where the first network slice is a network slice to be accessed by the terminal device 1300.

The determining unit 1301 is further configured to determine a first cell from one or more cells, where a relative priority of the first slice group in the first cell is highest in the one or more cells, or a dedicated priority corresponding to the first slice group in the first cell is highest in the one or more cells. The one or more cells are cells in which the terminal device 1300 can receive broadcast information and a tracking area code TAC carried in the broadcast information identifies a first tracking area, and the first tracking area is a tracking area TA that can support the first network slice, or the one or more cells are cells in which the terminal device 1300 can receive broadcast information and the broadcast information carries the first slice group.

The access unit 1302 is configured to access the first network slice in the first cell.

In an optional implementation, the relative priority of the first slice group is carried in the broadcast information, or the dedicated priority corresponding to the first slice group is configured by a network device for the terminal device 1300.

In an optional implementation, the terminal device 1300 further includes a communication unit 1303.

The communication unit 1303 is configured to receive dedicated priority information from the network device, where the dedicated priority information includes a dedicated priority corresponding to a slice group to which a network slice configured for the terminal device 1300 belongs, or the dedicated priority information includes, in a TA, a dedicated priority corresponding to a slice group to which a network slice configured for the terminal device 1300 belongs.

The determining unit 1301 is further configured to determine, based on the dedicated priority information, a dedicated priority corresponding to the first slice group in each cell.

In an optional implementation, when there are at least two cells with highest relative priorities of the first slice group in a plurality of cells, the first cell is a cell with optimal radio signal quality in the at least two cells.

In an optional implementation, the one or more cells work at a first frequency band, and the first frequency band is preset or is configured by the network device. The relative priority of the first slice group in the first cell is highest in the one or more cells working at the first frequency band, or the dedicated priority corresponding to the first slice group in the first cell is highest in the one or more cells working at the first frequency band.

In an optional implementation, the determining unit 1301 is further configured to determine a to-be-accessed network slice as the first network slice; or when there are a plurality of to-be-accessed network slices, select, as the first network slice from the plurality of to-be-accessed network slices, a network slice in which a protocol data unit PDU session is established; or when there are a plurality of network slices in which a PDU session is established in to-be-accessed network slices, select, as the first network slice from the plurality of network slices, a network slice in which the PDU session is in an active state.

For more detailed descriptions of the terminal device 1300, refer to related descriptions in the foregoing method embodiments. Details are not described herein again.

FIG. 14 is a schematic diagram of a structure of a network device according to an embodiment of this application. The network device 1400 may be configured to implement functions of the network device in the foregoing method embodiments, and therefore can also implement beneficial effect of the foregoing method embodiments. The network device 1400 includes a determining unit 1401 and a communication unit 1402. The determining unit 1401 is configured to determine dedicated priority information for a terminal device, where the dedicated priority information includes a dedicated priority, in a tracking area TA, of a slice group to which a network slice configured for the terminal device belongs.

The communication unit 1402 is configured to send the dedicated priority information to the terminal device, where the dedicated priority information is used by the terminal device to perform cell selection or cell reselection.

In an optional implementation, the dedicated priority information includes dedicated priorities of slice groups to which network slices configured for the terminal device belong in one or more TAs at or near a location of the terminal device.

In an optional implementation, slice groups to which the network slices configured for the terminal device belong in the one or more TAs correspond to deployment frequency bands, and the dedicated priority information includes a dedicated priority corresponding to a slice group to which the network slice belongs in each TA in a corresponding deployment frequency band.

In an optional implementation, the dedicated priority information is carried in a registration response message, or the dedicated priority information is carried in a configuration update message.

In an optional implementation, the network device 1400 configures different dedicated priority information for different terminal devices. Alternatively, the network device 1400 configures dedicated priority information for some terminal devices, and does not configure dedicated priority information for another terminal device.

For more detailed descriptions of the network device 1400, refer to related descriptions in the foregoing method embodiments. Details are not described herein again.

FIG. 15 is a schematic diagram of a structure of an access network device according to an embodiment of this application. The access network device 1500 may be configured to implement functions of the access network device in the foregoing method embodiments, and therefore can also implement beneficial effect of the foregoing method embodiments. The access network device 1500 includes a communication unit 1501. The communication unit 1501 is configured to broadcast relative priorities of slice groups in one or more cells, where a broadcast relative priority of a slice group in each cell is a relative priority of a slice group to which a network slice supported by the cell belongs, and the relative priorities of the slice groups in the one or more cells broadcast by the communication unit 1501 are used by a terminal device to perform cell selection or cell reselection.

In an optional implementation, the relative priorities of the slice groups in the one or more cells are carried in broadcast information.

In an optional implementation, the broadcast information is a system information block SIB.

In an optional implementation, the relative priorities of the slice groups in the one or more cells are configured by the access network device 1500.

In an optional implementation, the access network device 1500 further includes a determining unit 1502, configured to: determine, in each of the one or more cells, a high relative priority for the slice group to which the network slice preferably supported by the cell belongs, and determine a low relative priority for a slice group to which a network slice other than the preferably supported network slice belongs.

In an optional implementation, a relative priority of a slice group to which a network slice preferably supported by each of the one or more cells belongs is higher than a relative priority of a slice group to which a network slice other than the preferably supported network slice in the cell belongs. Optionally, a frequency band priority of a network slice preferably supported by each cell in a working frequency band of the cell is highest in the one or more frequency bands.

In an optional implementation, the determining unit 1502 is further configured to determine, before the communication unit 1501 broadcasts the relative priorities of the slice groups in the one or more cells, frequency band priority information of one or more network slices, where frequency band priority information of each network slice includes frequency band priorities of the network slice in one or more frequency bands.

The determining unit 1502 is further configured to determine, for each of the one or more cells based on a frequency band priority of a network slice supported by the cell in a working frequency band of the cell, a relative priority of a slice group to which the network slice belongs.

In an optional implementation, frequency band priority information of each network slice is a frequency band list in which performance or experience of the network slice at each of one or more working frequency bands is sorted in descending order. For each of the one or more cells, the determining unit 1502 is further configured to determine, based on a location of the working frequency band of the cell in the frequency band list of the network slice, a relative priority of a slice group to which the network slice belongs.

In another embodiment, in the access network device 1500 shown in FIG. 15, the communication unit 1501 and the determining unit 1502 may be configured to perform the following operations.

The communication unit 1501 is configured to broadcast slice groups in one or more cells, where a broadcast slice group in each cell is a slice group to which a network slice preferably supported by the cell belongs, and the slice groups in the one or more cells broadcast by the communication unit 1501 are used by a terminal device to perform cell selection or cell reselection.

In an optional implementation, the determining unit 1502 is configured to select, before the communication unit 1501 broadcasts slice groups in one or more cells, for each of the one or more cells, a slice group to which a preferably supported network slice belongs from one or more slice groups in the cell, as a broadcast slice group.

In an optional implementation, for each of the one or more cells, the communication unit 1501 skips broadcasting a slice group to which a network slice other than the preferably supported network slice in a network slice supported by the cell belongs.

In an optional implementation, the slice group broadcast by the communication unit 1501 excludes a slice group to which a network slice other than the preferably supported network slice in the network slices supported by each of the one or more cells belongs.

In an optional implementation, the network slice preferably supported by each of the one or more cells is determined based on frequency band priority information of the network slice, frequency band priority information of each network slice includes frequency band priorities of the network slice in one or more frequency bands, and a frequency band priority of the network slice preferably supported by each cell in a working frequency band of the cell is highest in the one or more frequency bands.

In an optional implementation, frequency band priority information of each network slice is a frequency band list in which performance or experience of the network slice at each of one or more working frequency bands is sorted in descending order. For each of the one or more cells, the determining unit 1502 is further configured to determine, based on whether a working frequency band of the cell is at a highest location in the frequency band list of the network slice, whether the cell preferably supports the network slice.

In an optional implementation, the determining unit 1502 is further configured to determine dedicated priority information for the terminal device, where the dedicated priority information includes a dedicated priority corresponding to a slice group to which a network slice configured for the terminal device belongs, or the dedicated priority information includes, in a tracking area TA, a dedicated priority corresponding to a slice group to which a network slice configured for the terminal device belongs. The communication unit 1501 is further configured to send the dedicated priority information to the terminal device, where the dedicated priority information is used by the terminal device to perform cell selection or cell reselection.

In an optional implementation, the access network device 1500 configures different dedicated priority information for different terminal devices.

For more detailed descriptions of the access network device 1500, refer to related descriptions in the foregoing method embodiments. Details are not described herein again.

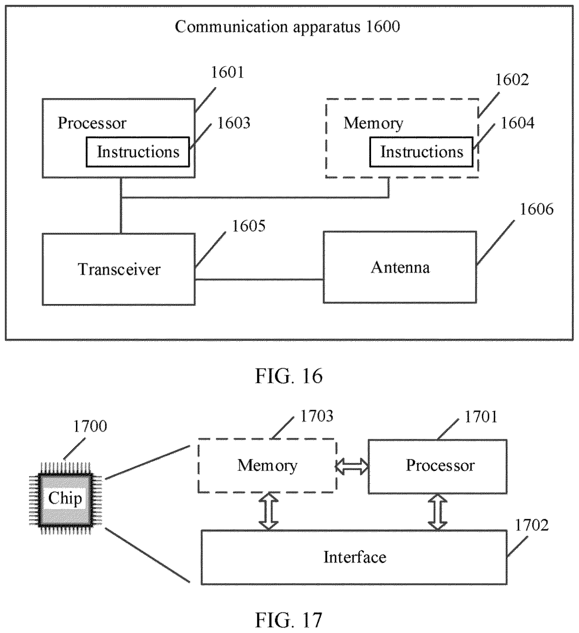

FIG. 16 is a schematic diagram of a structure of a communication apparatus according to an embodiment of this application. The communication apparatus 1600 may be a terminal device, a network device, or an access network device; or may be a chip, a chip system, a processor, or the like that supports the terminal device in implementing the foregoing methods; or may be a chip, a chip system, a processor, or the like that supports the network device in implementing the foregoing methods; or may be a chip, a chip system, a processor, or the like that supports the access network device in implementing the foregoing methods. The apparatus may be configured to implement the methods described in the foregoing method embodiments. For details, refer to the descriptions in the foregoing method embodiments.

The communication apparatus 1600 may include one or more processors 1601. The processor 1601 may be a general-purpose processor, a special-purpose processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 1600 may include one or more memories 1602. The memory 1602 may store instructions 1604, and the instructions may be run on the processor 1601, so that the communication apparatus 1600 performs the method described in the foregoing method embodiments. Optionally, the memory 1602 may further store data. The processor 1601 and the memory 1602 may be separately disposed, or may be integrated together.

The memory 1602 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, or a portable read-only memory (Compact Disc Read-Only Memory, CD-ROM).

Optionally, the communication apparatus 1600 may further include a transceiver 1605 and an antenna 1606. The transceiver 1605 may be referred to as a transceiver unit, a transceiver machine, a transceiver circuit, or the like, and is configured to implement a transceiver function. The transceiver 1605 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

When the communication apparatus 1600 is a terminal device, the transceiver 1605 is configured to perform S201 in the cell determining method 200, S302 in the cell determining method 300, and S401 in the cell determining method 400, and the processor 1601 is configured to perform S101, S102, and S103 in the cell determining method 100, S202, S203, and S204 in the cell determining method 200, S303, S304, and S305 in the cell determining method 300, and S402, S403, and S404 in the cell determining method 400.

When the communication apparatus 1600 is a network device, the transceiver 1605 is configured to perform S302 in the cell determining method 300, and the processor 1601 is configured to perform S301 in the cell determining method 300.

When the communication apparatus 1600 is an access network device, the transceiver 1605 is configured to perform S201 in the cell determining method 200, and is configured to perform S401 in the cell determining method 400.

In another possible design, the processor 1601 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to perform signal transmission or transfer.

In still another possible design, optionally, the processor 1601 may store instructions 1603, and the instructions 1603 are run on the processor 1601, so that the communication apparatus 1600 can perform the methods described in the foregoing method embodiments. The instructions 1603 may be fixed in the processor 1601. In this case, the processor 1601 may be implemented by hardware.

In yet another possible design, the communication apparatus 1600 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a terminal device, a network device, or an access network device. However, a scope of the communication apparatus described in embodiments of this application is not limited thereto, and a structure of the communication apparatus may not be limited by the structure in FIG. 16. The communication apparatus may be an independent device or may be a part of a large device. For example, the communication apparatus may be:
(1) an independent integrated circuit IC, a chip, or a chip system or subsystem;
(2) a set of one or more ICs, where optionally, the IC set may also include a storage component configured to store data and instructions;
(3) an ASIC, like a modem (modulator);
(4) a module that can be embedded in another device;
(5) a receiver machine, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be the chip or the chip system, refer to a schematic diagram of a structure of a chip shown in FIG. 17. The chip 1700 shown in FIG. 17 includes a processor 1701 and an interface 1702. There may be one or more processors 1701, and there may be a plurality of interfaces 1702. The processor 1701 may be a logic circuit, and the interface 1702 may be an input/output interface, an input interface, or an output interface. The chip 1700 may further include a memory 1703.

In a design, when the chip is configured to implement functions of the terminal device in embodiments of this application, the processor 1701 is configured to determine a first slice group including a first network slice, where the first network slice is a network slice to be accessed by the chip 1700.

The processor 1701 is further configured to determine a first cell from one or more cells, where a relative priority of the first slice group in the first cell is highest in the one or more cells, or a dedicated priority corresponding to the first slice group in the first cell is highest in the one or more cells. The one or more cells are cells in which the chip #00 can receive broadcast information and a tracking area code TAC carried in the broadcast information identifies a first tracking area, and the first tracking area is a tracking area TA that can support the first network slice, or the one or more cells are cells in which the chip 1700 can receive broadcast information and the broadcast information carries the first slice group.

The processor 1701 is configured to access the first network slice in the first cell.

In another design, when the chip is configured to implement functions of the network device in embodiments of this application, the processor 1701 is configured to determine dedicated priority information for a terminal device, where the dedicated priority information includes a dedicated priority, in a tracking area TA, of a slice group to which a network slice configured for the terminal device belongs.

The interface 1702 is configured to send the dedicated priority information to the terminal device, where the dedicated priority information is used by the terminal device to perform cell selection or cell reselection.

In still another design, when the chip is configured to implement functions of the access network device in embodiments of this application, the interface 1702 is configured to broadcast relative priorities of slice groups in one or more cells, where a broadcast relative priority of a slice group in each cell is a relative priority of a slice group to which a network slice supported by the cell belongs, and the relative priorities of the slice groups in the one or more cells broadcast by the interface #02 are used by a terminal device to perform cell selection or cell reselection.

In yet another design, when the chip is configured to implement functions of the access network device in embodiments of this application, the interface 1702 is configured to broadcast slice groups in one or more cells, where a broadcast slice group in each cell is a slice group to which a network slice preferably supported by the cell belongs, and the slice groups in the one or more cells broadcast by the interface 1702 are used by a terminal device to perform cell selection or cell reselection.

In embodiments of this application, the communication apparatus 1600 and the chip 1700 may further perform the implementations of the terminal device 1300, the network device 1400, and the access network device 1500. A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing method embodiments are based on a same concept, and bring same technical effect. For a specific principle, refer to the descriptions of the foregoing embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. In the text descriptions of this application, the character "/" usually indicates an "or" relationship between associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A cell determining method, wherein the method comprises:
determining, by a terminal device, a first slice group comprising a first network slice, wherein the first network slice is a network slice to be accessed by the terminal device;
determining, by the terminal device, a first cell from one or more cells, wherein a relative priority of the first slice group in the first cell is highest in the one or more cells, or a dedicated priority corresponding to the first slice group in the first cell is highest in the one or more cells,
the one or more cells are cells in which the terminal device can receive broadcast information and a tracking area code TAC carried in the broadcast information identifies a first tracking area, and the first tracking area is a tracking area TA that can support the first network slice, or the one or more cells are cells in which the terminal device can receive broadcast information and the broadcast information carries the first slice group; and
accessing, by the terminal device, the first network slice in the first cell.

2. The method according to claim 1, wherein the relative priority of the first slice group is carried in the broadcast information, or the dedicated priority corresponding to the first slice group is configured by a network device for the terminal device.

3. The method according to claim 1 or 2, wherein the method further comprises:
receiving, by the terminal device, dedicated priority information from the network device, wherein the dedicated priority information comprises a dedicated priority corresponding to a slice group to which a network slice configured for the terminal device belongs, or the dedicated priority information comprises, in a TA, a dedicated priority corresponding to a slice group to which a network slice configured for the terminal device belongs; and
determining, by the terminal device based on the dedicated priority information, a dedicated priority corresponding to the first slice group in each cell.

4. The method according to any one of claims 1 to 3, wherein the one or more cells work at a first frequency band, and the first frequency band is preset or is configured by the network device.

5. The method according to any one of claims 1 to 4, wherein the method further comprises:
determining, by the terminal device, a to-be-accessed network slice as the first network slice; or
when there are a plurality of to-be-accessed network slices, selecting, by the terminal device, as the first network slice from the plurality of to-be-accessed network slices, a network slice in which a protocol data unit PDU session is established; or
when there are a plurality of network slices in which a PDU session is established in to-be-accessed network slices, selecting, by the terminal device, as the first network slice from the plurality of network slices, a network slice in which the PDU session is in an active state.

6. A cell determining method, wherein the method is applied to an access network device, and the method comprises:
broadcasting, by the access network device, relative priorities of slice groups in one or more cells, wherein a broadcast relative priority of a slice group in each cell is a relative priority of a slice group to which a network slice supported by the cell belongs, and
the relative priorities of the slice groups in the one or more cells broadcast by the access network device are used by a terminal device to perform cell selection or cell reselection.

7. The method according to claim 6, wherein the relative priorities of the slice groups in the one or more cells are carried in broadcast information.

8. The method according to claim 7, wherein the broadcast information is a system information block SIB.

9. The method according to any one of claims 6 to 8, wherein the relative priorities of the slice groups in the one or more cells are configured by the access network device.

10. The method according to any one of claims 6 to 9, wherein before the broadcasting, by the access network device, relative priorities of slice groups in one or more cells, the method further comprises:
determining, by the access network device, frequency band priority information of one or more network slices, wherein frequency band priority information of each network slice comprises frequency band priorities of the network slice in one or more frequency bands; and
determining, by the access network device for each of the one or more cells based on a frequency band priority of a network slice supported by the cell in a working frequency band of the cell, a relative priority of a slice group to which the network slice belongs.

11. A cell determining method, wherein the method comprises:
determining, by a network device, dedicated priority information for a terminal device, wherein the dedicated priority information comprises a dedicated priority, in a tracking area TA, of a slice group to which a network slice configured for the terminal device belongs; and
sending, by the network device, the dedicated priority information to the terminal device, wherein the dedicated priority information is used by the terminal device to perform cell selection or cell reselection.

12. The method according to claim 11, wherein the dedicated priority information is carried in a registration response message, or the dedicated priority information is carried in a configuration update message.

13. The method according to claim 11 or 12, wherein the network device configures different dedicated priority information for different terminal devices.

14. A cell determining method, wherein the method is applied to an access network device, and the method comprises:
broadcasting, by the access network device, slice groups in one or more cells, wherein a broadcast slice group in each cell is a slice group to which a network slice preferably supported by the cell belongs, and
the slice groups in the one or more cells broadcast by the access network device are used by a terminal device to perform cell selection or cell reselection.

15. The method according to claim 14, wherein before the broadcasting, by the access network device, slice groups in one or more cells, the method further comprises:
selecting, by the access network device for each of the one or more cells, a slice group to which a preferably supported network slice belongs from one or more slice groups in the cell, as a broadcast slice group.

16. The method according to claim 14 or 15, wherein for each of the one or more cells, the access network device skips broadcasting a slice group to which a network slice other than the preferably supported network slice in a network slice supported by the cell belongs.

17. The method according to claims 14 to 16, wherein the slice group broadcast by the access network device excludes a slice group to which a network slice other than the preferably supported network slice in the network slices supported by each of the one or more cells belongs.

18. The method according to any one of claims 14 to 17, wherein
the network slice preferably supported by each of the one or more cells is determined based on frequency band priority information of the network slice, frequency band priority information of each network slice comprises frequency band priorities of the network slice in one or more frequency bands, and a frequency band priority of the network slice preferably supported by each cell in a working frequency band of the cell is highest in the one or more frequency bands.

19. The method according to any one of claims 14 to 18, wherein the method further comprises:
determining, by the access network device, dedicated priority information for the terminal device, wherein the dedicated priority information comprises a dedicated priority corresponding to a slice group to which a network slice configured for the terminal device belongs, or the dedicated priority information comprises, in a tracking area TA, a dedicated priority corresponding to a slice group to which a network slice configured for the terminal device belongs; and
sending, by the access network device, the dedicated priority information to the terminal device, wherein the dedicated priority information is used by the terminal device to perform cell selection or cell reselection.

20. The method according to claim 19, wherein the access network device configures different dedicated priority information for different terminal devices.

21. A terminal device, wherein the terminal device comprises:
a determining unit, configured to determine a first slice group comprising a first network slice, wherein the first network slice is a network slice to be accessed by the terminal device, wherein
the determining unit is further configured to determine a first cell from one or more cells, and a relative priority of the first slice group in the first cell is highest in the one or more cells, or a dedicated priority corresponding to the first slice group in the first cell is highest in the one or more cells; and
the one or more cells are cells in which the terminal device can receive broadcast information and a tracking area code TAC carried in the broadcast information identifies a first tracking area, and the first tracking area is a tracking area TA that can support the first network slice, or the one or more cells are cells in which the terminal device can receive broadcast information and the broadcast information carries the first slice group; and
an access unit, configured to access the first network slice in the first cell.

22. An access network device, wherein the access network device comprises:
a communication unit, configured to broadcast relative priorities of slice groups in one or more cells, wherein a broadcast relative priority of a slice group in each cell is a relative priority of a slice group to which a network slice supported by the cell belongs, and
the relative priorities of the slice groups in the one or more cells broadcast by the communication unit are used by a terminal device to perform cell selection or cell reselection.

23. A network device, wherein the network device comprises:
a determining unit, configured to determine dedicated priority information for a terminal device, wherein the dedicated priority information comprises a dedicated priority, in a tracking area TA, of a slice group to which a network slice configured for the terminal device belongs; and
a communication unit, configured to send the dedicated priority information to the terminal device, wherein the dedicated priority information is used by the terminal device to perform cell selection or cell reselection.

24. An access network device, wherein the access network device comprises:
a communication unit, configured to broadcast slice groups in one or more cells, wherein a broadcast slice group in each cell is a slice group to which a network slice preferably supported by the cell belongs, and
the slice groups in the one or more cells broadcast by the communication unit are used by a terminal device to perform cell selection or cell reselection.

25. A communication apparatus, comprising a memory and a processor, wherein
the memory is configured to store instructions or a computer program; and
the processor is configured to execute the computer program or the instructions stored in the memory, so that the communication apparatus performs the method according to any one of claims 1 to 5, or performs the method according to any one of claims 6 to 10, or performs the method according to any one of claims 11 to 13, or performs the method according to any one of claims 14 to 20.

26. A computer-readable storage medium, configured to store a computer program, wherein when the computer program is run on a computer, the computer is enabled to perform the method according to any one of claims 1 to 5, or perform the method according to any one of claims 6 to 10, or perform the method according to any one of claims 11 to 13, or perform the method according to any one of claims 14 to 20.

27. A computer program product, comprising computer instructions, wherein when the computer instructions are run on a computer, the computer is enabled to perform the method according to any one of claims 1 to 5, or perform the method according to any one of claims 6 to 10, or perform the method according to any one of claims 11 to 13, or perform the method according to any one of claims 14 to 20.
